(19) Europäisches Patentamt
European Patent Office
Office européen des brevets

(11) **EP 4 593 317 A1**

(12) **EUROPEAN PATENT APPLICATION**

(43) Date of publication:
**30.07.2025 Bulletin 2025/31**

(21) Application number: **24217013.2**

(22) Date of filing: **03.12.2024**

(51) International Patent Classification (IPC):
*H04L 5/00* $^{(2006.01)}$   *H04B 7/0404* $^{(2017.01)}$
*H04B 7/0456* $^{(2017.01)}$

(52) Cooperative Patent Classification (CPC):
**H04L 5/0023; H04B 7/0404; H04B 7/0456;
H04L 5/0051**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.01.2024 US 202463624027 P
30.10.2024 US 202418932095**

(71) Applicant: **Samsung Electronics Co., Ltd.
Suwon-si, Gyeonggi-do 16677 (KR)**

(72) Inventors:
• **SHAHMOHAMMADIAN, Hoda
San Jose, CA, 95134 (US)**
• **BAE, Jung Hyun
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **UL ENHANCEMENT FOR 3 TX ANTENNA PORT DEVICES**

(57) A system and a method are disclosed. The method includes transmitting, by a user equipment (UE), capability information for three transmit (Tx) antenna ports; configuring the three Tx antenna ports based on pre-defined configuration information including a codebook design comprising one or more matrices or vectors to map uplink data to be transmitted to more than two Tx antenna ports and less than four Tx antenna ports; and transmitting the uplink data via the configured three Tx antenna ports.

```
┌─────────────────────┐
│ Transmit capability │
│ information for     │
│ three Tx            │
│ antenna ports       │
│ 301                 │
└─────────────────────┘
          │
          ▼
┌─────────────────────┐
│ Configure the three │
│ Tx antenna ports    │
│ based on            │
│ pre-defined         │
│ configuration       │
│ information         │
│ 302                 │
└─────────────────────┘
          │
          ▼
┌─────────────────────┐
│ Transmit uplink     │
│ data via the        │
│ configured three Tx │
│ antenna ports       │
│ 303                 │
└─────────────────────┘
```

**FIG. 3**

**Description**

TECHNICAL FIELD

The present disclosure generally relates to enhancements in uplink (UL) transmission capabilities within fifth-generation (5G) new radio (NR) networks. More particularly, the subject matter disclosed herein pertains to the development of mobile user equipments (UEs) equipped with three transmit (Tx) antennas to enhance physical uplink shared channel (PUSCH) performance.

SUMMARY

In the framework of the 3rd Generation Partnership Project (3GPP), UL transmissions may be categorized by the number of supported Tx antennas and their associated codebooks, which define how signals are transmitted and processed. The specifications within the 5G NR standard support configurations for one, two, four, and eight Tx antennas. This range leaves a noticeable gap for mid-range devices that could benefit from enhanced UL performance without incurring the substantial power amplifier (PA) costs and increased device size associated with higher Tx antenna counts.

To address the increasing demand for higher UL throughput with manageable hardware costs, this disclosure introduces support for 3 Tx antennas in UEs. This development may involve the creation of a new codebook design specifically tailored for three-port PUSCH operations, capable of supporting up to three layers of transmission. The proposed enhancements to the NR specifications include, for example, the introduction of new codebook designs for coherent, non-coherent, and partially coherent precoding. Additionally, revised radio resource control (RRC) parameters are proposed to enable 3 Tx modes. Power scaling for PUSCH and sounding reference signal (SRS) ports configured for 3 Tx transmissions may be included, alongside the reconfiguration of existing four-port SRS resources to accommodate the 3 Tx codebook-based UL transmissions.

The integration of 3 Tx antennas in the design addresses practical limitations such as PA cost and device size while improving UL throughput performance compared to 1, 2, 4, and 8 Tx antenna configurations. This approach enhances overall network efficiency and user experience by providing increased flexibility in device design and network deployment.

In an embodiment, a method performed by a UE comprises transmitting, by the UE, capability information for three Tx antenna ports; configuring the three Tx antenna ports based on pre-defined configuration information including a codebook design comprising one or more matrices or vectors to map uplink data to be transmitted to more than two Tx antenna ports and less than four Tx antenna ports; and transmitting the uplink data via the configured three Tx antenna ports.

In an embodiment, a UE comprises a memory device; and a processor configured to execute instructions stored on the memory device, wherein the instructions cause the processor to: transmit, by a UE, capability information for three Tx antenna ports; configure the three Tx antenna ports based on pre-defined configuration information including a codebook design comprising one or more matrices or vectors to map uplink data to be transmitted to more than two Tx antenna ports and less than four Tx antenna ports; and transmit the uplink data via the configured three Tx antenna ports

BRIEF DESCRIPTION OF THE DRAWING

In the following section, the aspects of the subject matter disclosed herein will be described with reference to exemplary embodiments illustrated in the figures, in which:

FIG. 1 is a transmitting device or a receiving device in a communication system, according to an embodiment;
FIG. 2 illustrates deployment of a UE in a wireless network environment, according to an embodiment;
FIG. 3 is a flowchart illustrating configuring a UE for transmitting UL data via three configured Tx antenna ports, according to an embodiment;
FIG. 4 is a block diagram of an electronic device in a network environment, according to an embodiment; and
FIG. 5 illustrates a system including a UE and a gNB, in communication with each other, according to an embodiment.

DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts or modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

"Tx antenna ports," as used herein, refers to the physical or logical interfaces in a UE that are used to transmit UL signals to a network entity, such as a gNB. These ports enable the UE to transmit data through distinct transmission paths or antennas. The term may include configurations where multiple antenna ports are used for coherent, non-coherent, or partial coherent precoding, depending on the selected transmission mode. Each port is associated with specific UL characteristics (or parameters), such as frequency, phase, and timing, allowing for precise control over UL transmissions. The term encompasses any mechanism by which a UE can transmit through one or more UL paths to enhance performance in a wireless communication network.

"Resource," (or "SRS resource") as used herein, refers to an SRS that is transmitted by the UE to enable a network entity, such as a gNB, to estimate the UL channel quality. An SRS resource includes one or more SRS ports that are mapped to specific physical resources, such as time, frequency, or antenna ports, and is used for channel state information (CSI) feedback or for UL scheduling purposes. The term may also encompass multiple SRS resources in scenarios where the UE transmits through multiple antenna ports, providing the network with information to optimize UL transmission parameters. These resources are configured based on the specific transmission mode (e.g., periodic or aperiodic) and help maintain efficient communication between the UE and the network.

"Codebook," as used herein, refers to a pre-defined set of matrices or vectors used by a UE to perform precoding for UL transmissions. The codebook provides a mapping of how transmission signals are distributed across multiple antenna ports (e.g., UL Tx antenna ports) to optimize beamforming or spatial multiplexing. In this context, the codebook allows the UE to select a specific precoding vector or matrix that aligns the transmitted signal with the channel conditions, enabling efficient signal transmission. The term may include variations for different types of precoding, such as coherent, non-coherent, and partial coherent, targeting operations like 3 UL Tx antenna configurations, ensuring optimal signal quality and improved UL transmission performance.

"Coherent," as used herein, refers to a type of signal transmission where multiple antenna ports or transmission paths are synchronized in phase. In coherent precoding, the signals transmitted from different antenna ports are combined constructively, taking advantage of the phase alignment to enhance signal strength, reduce interference, and improve transmission quality. Coherent transmission typically requires accurate phase information and is used in scenarios where precise control of the signal phase is necessary for optimizing beamforming or spatial multiplexing.

"Non-coherent," as used herein, refers to a signal transmission method where signals from different antenna ports or transmission paths are not phase-aligned. In non-coherent precoding, the signals transmitted from multiple ports are treated independently, without combining them based on phase information. This approach is less complex than coherent transmission but may result in reduced signal strength and performance due to the lack of constructive interference. Non-coherent techniques may be used in environments where phase information is unavailable or not critical for performance.

"Partial coherent," as used herein, refers to a hybrid signal transmission method that combines elements of both coherent and non-coherent transmission. In partial coherent precoding, some antenna ports or transmission paths are phase-aligned (coherent), while others are not (non-coherent). This approach provides a balance between the complexity of fully coherent transmission and the simplicity of non-coherent transmission. Partial coherent techniques may be used to optimize performance in scenarios where full phase alignment is challenging or unnecessary, but some degree of phase coordination is beneficial for improving signal quality.

"Capability information," as used herein, refers to data, signals, parameters, or reporting information generated or communicated by a UE that describes the UE's functional abilities or limitations in relation to UL antenna ports, supported transmission layers, and/or SRS capabilities. The information may include, but is not limited to, details about the maximum number of supported layers, the maximum number of SRS ports, and the UE's compatibility with specific configurations, such as UL transmission using 3 Tx antenna ports.

Additionally, capability information may encompass UE capabilities related to RRC parameters, precoding methods (e.g., coherent, non-coherent, or partial coherent), and antenna switching configurations (e.g., 3T6R). This information can be transmitted to a network entity, such as a gNB or base station, to inform or enable the appropriate configuration and management of resources for efficient UL data transmission. The term may cover any relevant data or report provided by the UE that facilitates network-side configuration of the UE's antenna ports and UL transmission capabilities.

"Pre-defined configuration information," as used herein, refers to any predetermined data, parameters, or settings provided to a UE to manage or control the configuration of its UL antenna ports, transmission resources, or associated operations. This may include, but is not limited to, pre-defined details regarding codebook designs for coherent, non-coherent, or partial coherent precoding, as well as configurations for SRS resources, such as port assignments, muting or re-indexing of specific SRS ports, or power distribution among active SRS ports. The pre-defined configuration information may include particular enhancements suitable for 3 UL Tx antenna configurations.

In some embodiments, pre-defined configuration information may specify transmission setups for different antenna port configurations, such as configurations for 3T6R or similar transmission/reception scenarios. The information can also include pre-established rules or parameters for UL transmission management, enabling the UE to follow network instructions related to the use of multiple antenna ports, transmission layers, or resource allocations. This term may encompass any configuration details provided to the UE prior to transmission or operation, serving as a basis for configuring the UE's UL capabilities according to network requirements.

The present disclosure relates to optimizing the configuration and management of UL antenna ports, specifically for SRS transmissions, in devices with multiple Tx ports, such as 3 Tx antennas. Accordingly, the methods and systems disclosed herein efficiently allocate and switch between multiple antenna ports to improve communication performance while minimizing interference, power consumption, and signaling overhead.

The disclosure introduces flexible configurations for SRS resource allocation, allowing for different antenna switching mechanisms and power control techniques. It enables the UE to dynamically select and switch between different antenna ports for UL transmission. This provides better utilization of available antenna resources, improving UL performance in terms of data rates and reliability. Additionally, mechanisms are provided to reduce overhead and enhance power efficiency.

The disclosure supports a range of configurations for various antenna setups, including, for example, 3T6R systems, with attention to how SRS ports and antenna ports are assigned, switched, and managed. By introducing flexibility in these configurations and incorporating new UE capability reporting, the disclosure allows for improved 5G communication, especially in environments with multiple antenna systems (e.g., 3 Tx) and varying power efficiency needs.

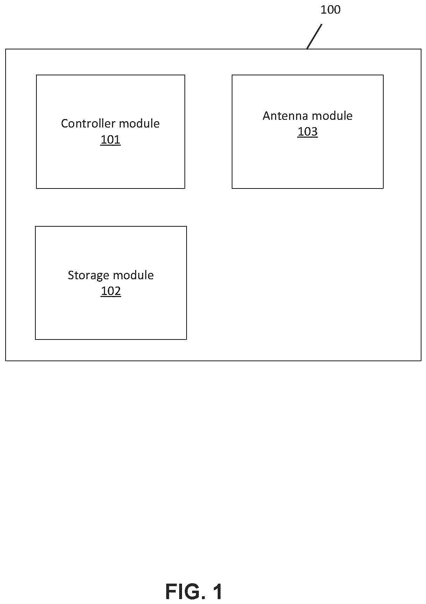

FIG. 1 is a transmitting device or a receiving device in a communication system, according to an embodiment.

Referring to FIG. 1, the device 100 may be a UE (e.g., a client device) or a gNB and includes a controller module 101 (e.g., a processor), a storage module 102, and an antenna module 103.

The controller module 101, storage module 102, and antenna module 103 may be structural components to facilitate efficient and accurate transmission or reception of wireless signals. As described herein, the wireless signals that are transmitted may be compressed (e.g., encoded) prior to transmission and reassembled (e.g., decoded) after reception. The device 100 may include all of the structural components necessary to compress, transmit, receive, and/or decompress the wireless signals.

The controller module 101 may include at least one processor and may execute instructions that are stored in the storage module 102. For example, the controller module 101 may execute instructions for performing compression, decompression, and signaling techniques. In addition, the controller module 101 may include a digital signal processor (DSP) for performing signal processing on a signal. The DSP may include one or more processing modules for functions such as synchronization, equalization, and demodulation. The processing modules may be implemented using one or more DSP techniques, such as fast Fourier transform (FFT), inverse FFT (IFFT), and digital filtering. Additionally or alternatively, the controller module 101 may include an application processor (AP) for running user applications on the device 100, such as web browsers, video players, and other software applications. The AP may include one or more processing units, memory devices, and input or output interfaces.

The storage module 102 may include transitory or non-transitory memory storing instructions that, when executed, cause the controller module 101 to perform steps to execute signaling and configuration techniques described herein. In addition, the storage module 102 may include a protocol stack for implementing communication protocols. The protocol stack may include one or more layers, such as a physical layer, a medium access control (MAC) layer, a radio link control (RLC) layer, and a packet data convergence protocol (PDCP) layer.

The antenna module 103 may include one or more antennas for wirelessly transmitting and receiving signals to a base station, UE or another device. For example, the antenna module 103 may receive a signal transmitted by a base station and convert it into an electrical signal.

The device 100 may be a receiver of a wireless communication system (e.g., the UE in 5G NR system) in DL. Additionally or alternatively, the UE may modulate (e.g., compress) and transmit signals to the gNB. Also, the device 100 may also transmit a signal via the antenna module 103 and, therefore, may be a transmitter or a gNB.

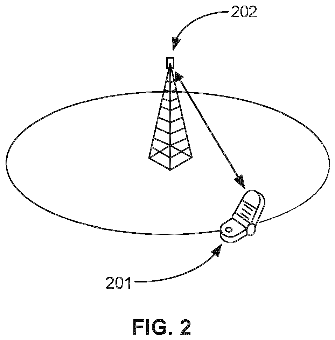

FIG. 2 illustrates deployment of a UE in a wireless network environment, according to an embodiment.

Referring to FIG. 2 a UE 201 and a base station (e.g., a gNB) 202 are shown in a network environment. In this figure, the UE 201, depicted as a cellular device, is located within a communication region within a pre-defined proximity to the base station 202, allowing it to send and receive signals from the both base 202. The arrows indicate the communication paths from the base stations 202 to the UE 201, or vice versa. Although one reference line with arrows is shown, two or more communication paths implemented through logical antenna ports may be used for UL transmission by the UE 201, such as 2 Tx, 3 Tx, 4 Tx, 6 Tx, and/or 8 Tx. The present disclosure generally focuses on systems and methods for configuring 3 Tx antenna ports.

Codebook-based UL transmissions will now be described.

With the growing demand for higher UL throughput, the introduction of UEs with 3 Tx chains provides a practical solution that provides a beneficial tradeoff between performance and indication overhead. These 3 Tx devices offer a compromise between the higher PA costs and larger sizes of 4 Tx antenna port devices, and the lower UL throughput performance of 3 Tx antenna port devices. Consequently, modifications to current specifications are necessary to support 3 Tx antenna port codebook-based UL transmissions.

In the realm of codebook-based physical UL shared channel (PUSCH) for multiple input, multiple output (MIMO) transmissions, a feature in UEs defines a parameter called *maxNumberMIMO-LayersCB-PUSCH*. This parameter indicates the maximum number of supported layers, with existing candidate values of {1, 2, 4, 8}. The emergence of devices with 3 Tx antenna ports may require the introduction of a new candidate value of {3} for this parameter. To ensure backward compatibility, new signaling protocols may be implemented for UEs with 3 Tx antennas, enabling them to declare a maximum rank of 1 or 2 for existing signaling systems, while allowing a maximum rank of 1, 2, or 3 for the new signaling systems. The radio resource control (RRC) parameter *maxRank* in the *PUSCH Config* information element (IE) is updated to support this new value of {3}.

Additionally, the introduction of 3 Tx antenna port devices may require an enhancement in the number of sounding reference signal (SRS) ports supported. The specification may include a UE feature for SRS resources, which uses a parameter called *maxNumberSRS-Ports-PerResource* with values {1, 2, 4, 8}. A candidate value of {3} has is added to accommodate 3 Tx antenna port devices, which may use signaling to declare 1 or 2 antenna ports for existing systems, and 1, 2, or 3 antenna ports for new signaling systems. This update may also be reflected in the RRC parameter *nrofSRS-Ports* in the *SRS-Config IE,* where a value of {3} is introduced.

To facilitate the adoption of this 3 Tx mode, new RRC indications from the gNB may be necessary. This can be accomplished either explicitly through the introduction of a new RRC parameter or implicitly by setting a configured value of {3} for *nrofSRS-Ports* in the SRS-Config IE. Another approach may involve introducing a new RRC parameter for zero power SRS port selection, such as *SRS-PortIndex,* which could be configured for a 4 port SRS resource repurposed for 3 Tx transmissions.

Codebook designs for 3 Tx antenna port devices can minimize specification impact and may not require enhancements to SRS resources. By utilizing configured 4 port SRS resources, non-coherent UL codebooks can be developed for 3 Tx codebook-based UL transmissions, with one specific port always allocated zero power. For the remaining antenna ports, power allocation may be adjusted by scaling the linear value according to the ratio of the number of antenna ports with a non-zero PUSCH transmission power to three, which is the maximum number supported for 3 Tx antenna port devices.

The selection of a specific port to allocate zero power may be closely tied to SRS transmission settings. When configured with the higher layer parameter *txConfig* set to 'codebook,' the UE may use at least one SRS resource before the scheduling downlink control information (DCI) is transmitted. The transmitted precoding matrix indicator (TPMI) field in the DCI may specify the precoder for PUSCH transmission, aligning with the selected SRS resource. This setup may ensure that the number of antenna ports used in UL codebooks matches those in the SRS resource indicated by DCI formats 0_1, 0_2, or 0_3, or by *configuredGrantConfig,* facilitating coherent transmission strategies.

Selection of the zero power port can occur independently from SRS settings, either through pre-defined rules (e.g., always the fourth port), gNB configurations, or decisions made by the UE. This selection process can vary by layer, requiring additional signaling to manage performance trade-offs between efficient transmission and system complexity.

To accommodate scenarios where the zero-power allocated port is not the fourth, a port re-indexing procedure may follow the guidelines established for SRS transmission. Alternatively, specifying a three port SRS resource may allow for the introduction of corresponding new UL codebooks, enhancing the system's flexibility and performance. In this setup, power allocation for each antenna port may involve scaling linear values based on the number of active antenna ports relative to the maximum number of SRS ports supported in a single SRS resource.

This comprehensive addition ensures that UEs with 3 Tx antenna ports can effectively meet the demands of modern mobile communication networks, balancing system complexity with performance enhancements.

A non-coherent codebook will now be described.

In accordance with an embodiment, several non-coherent codebooks are proposed for 3 Tx antenna port codebook-based UL transmissions, enabling efficient single-layer, two-layer, and three-layer transmission modes.

Single-layer transmission may utilize a four port SRS resource where the precoding matrices are adapted to support a 3 Tx antenna configuration. The precoding matrix for each antenna can be described as:

$$\frac{1}{\sqrt{3}}\begin{bmatrix}1\\0\\0\\0\end{bmatrix}, \frac{1}{\sqrt{3}}\begin{bmatrix}0\\1\\0\\0\end{bmatrix}, \frac{1}{\sqrt{3}}\begin{bmatrix}0\\0\\1\\0\end{bmatrix}$$

, reflecting power scaling norms of $1/\sqrt{3}$ to accommodate the reduced number of active transmission chains. This configuration allows for the reuse of TPMI indexes 0-3, as specified in Tables 6.3.1.5-2 and 6.3.1.5-3 of Technical Specification (TS) 38.211 (The tables included in this disclosure from TS 38.211 are referenced using their corresponding table numbers from TS 38.211), with adaptations for 3 Tx UL transmission, as shown below.

Table 6.3.1.5-2: Precoding matrix **W** for single-layer transmission using four antenna ports with transform precoding enabled [TS 38.211].

| TPMI index | **W** (ordered from left to right in increasing order of TPMI index) | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | | | | |

Table 6.3.1.5-3: Precoding matrix $W$ for single-layer transmission using four antenna ports with transform precoding disabled [TS 38.211].

| TPMI index | $W$ (ordered from left to right in increasing order of TPMI index) | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | | | | |

These tables illustrate the standard precoding matrices $W$ for single-layer transmission, enabling this approach under different conditions of transform precoding, either enabled or disabled.

For a three port SRS resource, the codebook may be:

$$\frac{1}{\sqrt{3}}\begin{bmatrix}1\\0\\0\end{bmatrix}, \frac{1}{\sqrt{3}}\begin{bmatrix}0\\1\\0\end{bmatrix}, \frac{1}{\sqrt{3}}\begin{bmatrix}0\\0\\1\end{bmatrix}$$

, maintaining the new power scaling for streamlined transmission efficiency.

Two-layer transmission with a four port SRS resource may involve more complex precoding combinations to support layered transmissions effectively. Examples of such combinations may include:

$$\frac{1}{\sqrt{3}}\begin{bmatrix}1&0\\0&1\\0&0\\0&0\end{bmatrix}, \frac{1}{\sqrt{3}}\begin{bmatrix}1&0\\0&0\\0&1\\0&0\end{bmatrix}, \frac{1}{\sqrt{3}}\begin{bmatrix}0&0\\1&0\\0&1\\0&0\end{bmatrix}$$

, and similar configurations that utilize different antenna port combinations for enhanced signal diversity and resilience. This mode may also support the reuse of TPMI indexes 0-5 from Table 6.3.1.5-5 of TS 38.211, as shown below.

Table 6.3.1.5-5: Precoding matrix $W$ for two-layer transmission using four antenna ports with transform precoding disabled [TS 38.211].

| TPMI index | $W$ (ordered from left to right in increasing order of TPMI index) | | | |
|---|---|---|---|---|
| 0-3 | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 4-7 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | | |

For a three-port SRS resource, the matrix may be simplified further to configurations such as:

$$\frac{1}{\sqrt{3}}\begin{bmatrix}1&0\\0&1\\0&0\end{bmatrix}, \frac{1}{\sqrt{3}}\begin{bmatrix}1&0\\0&0\\0&1\end{bmatrix}, \frac{1}{\sqrt{3}}\begin{bmatrix}0&0\\1&0\\0&1\end{bmatrix}$$

, aligning with the three available ports.

Three-layer transmission in the context of a four port SRS resource may employ a precoding matrix of:

$$\frac{1}{\sqrt{3}} \begin{bmatrix} 1 & 0 & 0 \\ 0 & 1 & 0 \\ 0 & 0 & 1 \\ 0 & 0 & 0 \end{bmatrix}$$

, facilitating a full utilization of the three transmission layers while still accommodating the fourth port without power. Additionally or alternatively, according to an adaptation necessary for TS 38.211, TPMI index 0 may be specifically utilized from Table 6.3.1.5-6, shown below, with the power scaling of $\frac{1}{\sqrt{3}}$ for a 3 Tx UL transmission.

Table 6.3.1.5-6: Precoding matrix **W** for three-layer transmission using four antenna ports with transform precoding disabled [TS 38.211].

| TPMI index | **W** (ordered from left to right in increasing order of TPMI index) | | | |
|---|---|---|---|---|
| 0-3 | $\frac{1}{2} \begin{bmatrix} 1 & 0 & 0 \\ 0 & 1 & 0 \\ 0 & 0 & 1 \\ 0 & 0 & 0 \end{bmatrix}$ | | | |

When utilizing a three-port SRS resource for a three-layer transmission, the precoding matrix may be:

$$\frac{1}{\sqrt{3}} \begin{bmatrix} 1 & 0 & 0 \\ 0 & 1 & 0 \\ 0 & 0 & 1 \end{bmatrix}$$

, streamlining the process to fit the three active Tx ports.

A coherent codebook will now be described.

In accordance with an embodiment, coherent codebooks may be developed for 3 Tx antenna port codebook-based UL transmissions, optimizing both single-layer and multi-layer configurations.

Single-layer transmission may utilize a four port SRS resource, employing complex and varied precoding matrices designed to enhance signal diversity and performance. For example, the precoding configurations may be as follows:

$$\frac{1}{\sqrt{3}}\begin{bmatrix}1\\1\\1\\0\end{bmatrix}, \frac{1}{\sqrt{3}}\begin{bmatrix}1\\1\\-1\\0\end{bmatrix}, \frac{1}{\sqrt{3}}\begin{bmatrix}1\\-1\\1\\0\end{bmatrix}, \frac{1}{\sqrt{3}}\begin{bmatrix}1\\-1\\-1\\0\end{bmatrix}, \frac{1}{\sqrt{3}}\begin{bmatrix}1\\1\\j\\0\end{bmatrix}, \frac{1}{\sqrt{3}}\begin{bmatrix}1\\1\\-j\\0\end{bmatrix}, \frac{1}{\sqrt{3}}\begin{bmatrix}1\\-1\\j\\0\end{bmatrix}, \frac{1}{\sqrt{3}}\begin{bmatrix}1\\-1\\-j\\0\end{bmatrix},$$

$$\frac{1}{\sqrt{3}}\begin{bmatrix}1\\j\\1\\0\end{bmatrix}, \frac{1}{\sqrt{3}}\begin{bmatrix}1\\j\\-1\\0\end{bmatrix}, \frac{1}{\sqrt{3}}\begin{bmatrix}1\\-j\\1\\0\end{bmatrix}, \frac{1}{\sqrt{3}}\begin{bmatrix}1\\-j\\-1\\0\end{bmatrix}, \frac{1}{\sqrt{3}}\begin{bmatrix}1\\j\\j\\0\end{bmatrix}, \frac{1}{\sqrt{3}}\begin{bmatrix}1\\j\\-j\\0\end{bmatrix}, \frac{1}{\sqrt{3}}\begin{bmatrix}1\\-j\\j\\0\end{bmatrix}, \frac{1}{\sqrt{3}}\begin{bmatrix}1\\-j\\-j\\0\end{bmatrix}.$$

For a 3 Tx UL transmission, these configurations suggest that the UE may reuse TPMI indexes 12-27 for a four-port system in Tables 6.3.1.5-2 and 6.3.1.5-3 of TS 38.211, shown below.

8

Table 6.3.1.5-2: Precoding matrix **W** for single-layer transmission using four antenna ports with transform precoding enabled [TS 38.211].

| TPMI index | W (ordered from left to right in increasing order of TPMI index) | | | | | | | |
|---|---|---|---|---|---|---|---|---|
| 8-15 | | | | | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16-23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |
| 24-27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

Table 6.3.1.5-3: Precoding matrix **W** for single-layer transmission using four antenna ports with transform precoding disabled [TS 38.211].

| TPMI index | W (ordered from left to right in increasing order of TPMI index) | | | | | | | |
|---|---|---|---|---|---|---|---|---|
| 8-15 | | | | | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |
| 16-23 | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| 24-27 | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | |

The tables detail the standard precoding matrix W for single-layer transmission with transform precoding enabled or disabled, adapted with a power scaling of $\frac{1}{\sqrt{3}}$ while keeping the power of the last port (fourth port) effectively at zero.

For a three-port SRS resource, the matrix configurations may be simplified to exclude the fourth port, maintaining efficient transmission capability across the three utilized ports with corresponding precoding adjustments:

$$\frac{1}{\sqrt{3}}\begin{bmatrix}1\\1\\1\end{bmatrix}, \frac{1}{\sqrt{3}}\begin{bmatrix}1\\1\\-1\end{bmatrix}, \frac{1}{\sqrt{3}}\begin{bmatrix}1\\-1\\1\end{bmatrix}, \frac{1}{\sqrt{3}}\begin{bmatrix}1\\-1\\-1\end{bmatrix}, \frac{1}{\sqrt{3}}\begin{bmatrix}1\\1\\j\end{bmatrix}, \frac{1}{\sqrt{3}}\begin{bmatrix}1\\1\\-j\end{bmatrix}, \frac{1}{\sqrt{3}}\begin{bmatrix}1\\-1\\j\end{bmatrix}, \frac{1}{\sqrt{3}}\begin{bmatrix}1\\-1\\-j\end{bmatrix},$$

$$\frac{1}{\sqrt{3}}\begin{bmatrix}1\\j\\1\end{bmatrix}, \frac{1}{\sqrt{3}}\begin{bmatrix}1\\j\\-1\end{bmatrix}, \frac{1}{\sqrt{3}}\begin{bmatrix}1\\-j\\1\end{bmatrix}, \frac{1}{\sqrt{3}}\begin{bmatrix}1\\-j\\-1\end{bmatrix}, \frac{1}{\sqrt{3}}\begin{bmatrix}1\\j\\j\end{bmatrix}, \frac{1}{\sqrt{3}}\begin{bmatrix}1\\j\\-j\end{bmatrix}, \frac{1}{\sqrt{3}}\begin{bmatrix}1\\-j\\j\end{bmatrix}, \frac{1}{\sqrt{3}}\begin{bmatrix}1\\-j\\-j\end{bmatrix}.$$

Two-layer transmission,

$$\frac{1}{\sqrt{2}}\begin{bmatrix}\bar{a} & \bar{b}\end{bmatrix}$$

, may introduce more complex arrangements where each layer $\bar{a}$ and $\bar{b}$ is derived from the single-layer codebooks, scaled for power efficiency.

Examples include, adjusting the precoding matrices to accommodate a four port SRS resource with only three active ports:

$$\frac{1}{\sqrt{6}}\begin{bmatrix}1&1\\1&1\\1&-1\\0&0\end{bmatrix}, \frac{1}{\sqrt{6}}\begin{bmatrix}1&1\\1&1\\j&-j\\0&0\end{bmatrix}, \frac{1}{\sqrt{6}}\begin{bmatrix}1&1\\j&j\\1&-1\\0&0\end{bmatrix}, \frac{1}{\sqrt{6}}\begin{bmatrix}1&1\\j&j\\j&-j\\0&0\end{bmatrix}, \frac{1}{\sqrt{6}}\begin{bmatrix}1&1\\-1&-1\\1&-1\\0&0\end{bmatrix}, \frac{1}{\sqrt{6}}\begin{bmatrix}1&1\\-1&-1\\j&-j\\0&0\end{bmatrix},$$

$$\frac{1}{\sqrt{6}}\begin{bmatrix}1&1\\-j&-j\\1&-1\\0&0\end{bmatrix}, \frac{1}{\sqrt{6}}\begin{bmatrix}1&1\\-j&-j\\j&-j\\0&0\end{bmatrix}.$$

According to an embodiment, in the context of TS 38.211, for a 3 Tx UL transmission, TPMI indexes 14-21 in Table 6.2.1.5-5, shown below, can be reused for the four port configuration with a new power scaling of $\frac{1}{\sqrt{6}}$. Table 6.3.1.5-5 illustrates the precoding matrix W configurations for two-layer transmissions with disabled transform precoding, emphasizing efficient use of available ports and ensuring power is not allocated to the inactive fourth port.

Table 6.3.1.5-5: Precoding matrix **W** for two-layer transmission using four antenna ports with transform precoding disabled [TS 38.211].

| TPMI index | W (ordered from left to right in increasing order of TPMI index) | | | |
|---|---|---|---|---|
| 12-15 | | | $\frac{1}{2\sqrt{2}}\begin{bmatrix}1&1\\1&1\\1&-1\\1&-1\end{bmatrix}$ | $\frac{1}{2\sqrt{2}}\begin{bmatrix}1&1\\1&1\\j&-j\\j&-j\end{bmatrix}$ |
| 16-19 | $\frac{1}{2\sqrt{2}}\begin{bmatrix}1&1\\j&j\\1&-1\\j&-j\end{bmatrix}$ | $\frac{1}{2\sqrt{2}}\begin{bmatrix}1&1\\j&j\\j&-j\\-1&1\end{bmatrix}$ | $\frac{1}{2\sqrt{2}}\begin{bmatrix}1&1\\-1&-1\\1&-1\\-1&1\end{bmatrix}$ | $\frac{1}{2\sqrt{2}}\begin{bmatrix}1&1\\-1&-1\\j&-j\\-j&j\end{bmatrix}$ |
| 20-21 | $\frac{1}{2\sqrt{2}}\begin{bmatrix}1&1\\-j&-j\\1&-1\\-j&j\end{bmatrix}$ | $\frac{1}{2\sqrt{2}}\begin{bmatrix}1&1\\-j&-j\\j&-j\\1&-1\end{bmatrix}$ | | - |

For a three-port SRS resource in two-layer transmissions, the matrices may reduce to a 3x1 configuration, maintaining the integrity and efficiency of signal transmission across the available antenna ports, for example:

$$\frac{1}{\sqrt{6}}\begin{bmatrix} 1 & 1 \\ 1 & 1 \\ 1 & -1 \end{bmatrix}, \frac{1}{\sqrt{6}}\begin{bmatrix} 1 & 1 \\ 1 & 1 \\ j & -j \end{bmatrix}, \frac{1}{\sqrt{6}}\begin{bmatrix} 1 & 1 \\ j & j \\ 1 & -1 \end{bmatrix}, \frac{1}{\sqrt{6}}\begin{bmatrix} 1 & 1 \\ j & j \\ j & -j \end{bmatrix}, \frac{1}{\sqrt{6}}\begin{bmatrix} 1 & 1 \\ -1 & -1 \\ 1 & -1 \end{bmatrix}, \frac{1}{\sqrt{6}}\begin{bmatrix} 1 & 1 \\ -1 & -1 \\ j & -j \end{bmatrix},$$

$$\frac{1}{\sqrt{6}}\begin{bmatrix} 1 & 1 \\ -j & -j \\ 1 & -1 \end{bmatrix}, \frac{1}{\sqrt{6}}\begin{bmatrix} 1 & 1 \\ -j & -j \\ j & -j \end{bmatrix}.$$

Three-layer transmission may be used to extend this methodology further, selecting configurations $\bar{a}$, $\bar{b}$ and $\bar{c}$ from the single-layer codebooks:

$$\frac{1}{\sqrt{3}}\begin{bmatrix} \bar{a} & \bar{b} & \bar{c} \end{bmatrix}$$

These selections may then be applied to a four port SRS resource as 4x1 matrixes with a power scaling of $\frac{1}{3}$, ensuring that only three ports are actively transmitting:

$$\frac{1}{3}\begin{bmatrix} 1 & 1 & 1 \\ 1 & -1 & 1 \\ 1 & 1 & -1 \\ 0 & 0 & 0 \end{bmatrix}, \frac{1}{3}\begin{bmatrix} 1 & 1 & 1 \\ 1 & -1 & 1 \\ j & j & -j \\ 0 & 0 & 0 \end{bmatrix}, \frac{1}{3}\begin{bmatrix} 1 & 1 & 1 \\ -1 & 1 & -1 \\ 1 & 1 & -1 \\ 0 & 0 & 0 \end{bmatrix}, \frac{1}{3}\begin{bmatrix} 1 & 1 & 1 \\ -1 & 1 & -1 \\ j & j & -j \\ 0 & 0 & 0 \end{bmatrix}.$$

This mode may enable TPMI indexes 3-6 to be reused from Table 6.3.1.5-6 of TS 38.211, shown below, for three-layer transmissions with transform precoding disabled, optimizing the power distribution and maximizing the transmission capabilities.

Table 6.3.1.5-6: Precoding matrix **W** for three-layer transmission using four antenna ports with transform precoding disabled [TS 38.211].

| TPM I index | W (ordered from left to right in increasing order of TPMI index) | | | |
|---|---|---|---|---|
| 0-3 | | | | $\dfrac{1}{2\sqrt{3}}\begin{bmatrix} 1 & 1 & 1 \\ 1 & -1 & 1 \\ 1 & 1 & -1 \\ 1 & -1 & -1 \end{bmatrix}$ |
| 4-6 | $\dfrac{1}{2\sqrt{3}}\begin{bmatrix} 1 & 1 & 1 \\ 1 & -1 & 1 \\ j & j & -j \\ j & -j & -j \end{bmatrix}$ | $\dfrac{1}{2\sqrt{3}}\begin{bmatrix} 1 & 1 & 1 \\ -1 & 1 & -1 \\ 1 & 1 & -1 \\ -1 & 1 & 1 \end{bmatrix}$ | $\dfrac{1}{2\sqrt{3}}\begin{bmatrix} 1 & 1 & 1 \\ -1 & 1 & -1 \\ j & j & -j \\ -j & j & j \end{bmatrix}$ | - |

EP 4 593 317 A1

For a three-port SRS resource, the three-layer transmission configurations, $\bar{a}$, $\bar{b}$ and $\bar{c}$, may be provided as 3x1 matrixes to exclude the inactive port, focusing the transmission power on the active ports and maximizing the system's efficiency and performance:

$$\frac{1}{3}\begin{bmatrix} 1 & 1 & 1 \\ 1 & -1 & 1 \\ 1 & 1 & -1 \end{bmatrix}, \frac{1}{3}\begin{bmatrix} 1 & 1 & 1 \\ 1 & -1 & 1 \\ j & j & -j \end{bmatrix}, \frac{1}{3}\begin{bmatrix} 1 & 1 & 1 \\ -1 & 1 & -1 \\ 1 & 1 & -1 \end{bmatrix}, \frac{1}{3}\begin{bmatrix} 1 & 1 & 1 \\ -1 & 1 & -1 \\ j & j & -j \end{bmatrix}.$$

A partial coherent codebook will now be described.

In accordance with an embodiment, for a 3 Tx antenna port device that follows a definition of partial coherency over two antenna ports, specific partial coherent codebooks are developed for 3 Tx codebook-based UL transmissions, for a single-layer transmission using a four port SRS resource, the codebooks may include configurations with a power scaling factor ("s") of $\frac{1}{\sqrt{3}}$ to adjust for the three active transmission antennas as follows:

$$\frac{1}{\sqrt{3}}\begin{bmatrix} 1 \\ 0 \\ 1 \\ 0 \end{bmatrix}, \frac{1}{\sqrt{3}}\begin{bmatrix} 1 \\ 0 \\ -1 \\ 0 \end{bmatrix}, \frac{1}{\sqrt{3}}\begin{bmatrix} 1 \\ 0 \\ j \\ 0 \end{bmatrix}, \frac{1}{\sqrt{3}}\begin{bmatrix} 1 \\ 0 \\ -j \\ 0 \end{bmatrix}, \frac{1}{\sqrt{3}}\begin{bmatrix} 0 \\ 1 \\ 0 \\ 0 \end{bmatrix}.$$

These configurations may permit the reuse of TPMI indexes 4-11 for the four port setup as specified in Tables 6.3.1.5-2 and 6.3.1.5-3 of TS 38.211, shown below, which describe the precoding matrices adapted to support three active ports and one inactive port.

Table 6.3.1.5-2: Precoding matrix **W** for single-layer transmission using four antenna ports with transform precoding enabled [TS 38.211].

| TPMI index | **W** (ordered from left to right in increasing order of TPMI index) | | | | | | | |
|---|---|---|---|---|---|---|---|---|
| 0-7 | | | | | $\frac{1}{2}\begin{bmatrix} 1 \\ 0 \\ 1 \\ 0 \end{bmatrix}$ | $\frac{1}{2}\begin{bmatrix} 1 \\ 0 \\ -1 \\ 0 \end{bmatrix}$ | $\frac{1}{2}\begin{bmatrix} 1 \\ 0 \\ j \\ 0 \end{bmatrix}$ | $\frac{1}{2}\begin{bmatrix} 1 \\ 0 \\ -j \\ 0 \end{bmatrix}$ |
| 8-15 | $\frac{1}{2}\begin{bmatrix} 0 \\ 1 \\ 0 \\ 1 \end{bmatrix}$ | $\frac{1}{2}\begin{bmatrix} 0 \\ 1 \\ 0 \\ -1 \end{bmatrix}$ | $\frac{1}{2}\begin{bmatrix} 0 \\ 1 \\ 0 \\ j \end{bmatrix}$ | $\frac{1}{2}\begin{bmatrix} 0 \\ 1 \\ 0 \\ -j \end{bmatrix}$ | | | | |

Table 6.3.1.5-3: Precoding matrix **W** for single-layer transmission using four antenna ports with transform precoding disabled [TS 38.211].

| TPMI index | **W** (ordered from left to right in increasing order of TPMI index) | | | | | | | |
|---|---|---|---|---|---|---|---|---|
| 0-7 | | | | | $\frac{1}{2}\begin{bmatrix} 1 \\ 0 \\ 1 \\ 0 \end{bmatrix}$ | $\frac{1}{2}\begin{bmatrix} 1 \\ 0 \\ -1 \\ 0 \end{bmatrix}$ | $\frac{1}{2}\begin{bmatrix} 1 \\ 0 \\ j \\ 0 \end{bmatrix}$ | $\frac{1}{2}\begin{bmatrix} 1 \\ 0 \\ -j \\ 0 \end{bmatrix}$ |

(continued)

| TPMI index | $W$ (ordered from left to right in increasing order of TPMI index) | | | | | | | |
|---|---|---|---|---|---|---|---|---|
| 8-15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | | | | |

A three-port SRS resource may be provided as:

$$\frac{1}{\sqrt{3}}\begin{bmatrix}1\\0\\1\end{bmatrix}, \frac{1}{\sqrt{3}}\begin{bmatrix}1\\0\\-1\end{bmatrix}, \frac{1}{\sqrt{3}}\begin{bmatrix}1\\0\\j\end{bmatrix}, \frac{1}{\sqrt{3}}\begin{bmatrix}1\\0\\-j\end{bmatrix}, \frac{1}{\sqrt{3}}\begin{bmatrix}0\\1\\0\end{bmatrix}.$$

In two-layer transmissions involving a four port SRS resource, the codebooks may be extended to include configurations such as:

$$\frac{1}{\sqrt{3}}\begin{bmatrix}1&0\\0&1\\1&0\\0&0\end{bmatrix}, \frac{1}{\sqrt{3}}\begin{bmatrix}1&0\\0&1\\j&0\\0&0\end{bmatrix}, \frac{1}{\sqrt{3}}\begin{bmatrix}1&0\\0&1\\-j&0\\0&0\end{bmatrix}, \frac{1}{\sqrt{3}}\begin{bmatrix}1&0\\0&1\\-1&0\\0&0\end{bmatrix}.$$

The UE can reuse TPMI indexes 6-13 for a four port configuration, incorporating a new power scaling factor s of $\frac{1}{\sqrt{3}}$ , as demonstrated in Table 6.3.1.5-5 of TS 38.211, provided below.

Table 6.3.1.5-5: Precoding matrix $W$ for two-layer transmission using four antenna ports with transform precoding disabled [TS 38.211].

| TPMI index | $W$ (ordered from left to right in increasing order of TPMI index) | | | |
|---|---|---|---|---|
| 4-7 | | | $\frac{1}{2}\begin{bmatrix}1&0\\0&1\\1&0\\0&-j\end{bmatrix}$ | $\frac{1}{2}\begin{bmatrix}1&0\\0&1\\1&0\\0&j\end{bmatrix}$ |
| 8-11 | $\frac{1}{2}\begin{bmatrix}1&0\\0&1\\-j&0\\0&1\end{bmatrix}$ | $\frac{1}{2}\begin{bmatrix}1&0\\0&1\\-j&0\\0&-1\end{bmatrix}$ | $\frac{1}{2}\begin{bmatrix}1&0\\0&1\\-1&0\\0&-j\end{bmatrix}$ | $\frac{1}{2}\begin{bmatrix}1&0\\0&1\\-1&0\\0&j\end{bmatrix}$ |
| 12-15 | $\frac{1}{2}\begin{bmatrix}1&0\\0&1\\j&0\\0&1\end{bmatrix}$ | $\frac{1}{2}\begin{bmatrix}1&0\\0&1\\j&0\\0&-1\end{bmatrix}$ | | |

A three-port SRS resource may be provided as:

$$\frac{1}{\sqrt{3}}\begin{bmatrix} 1 & 0 \\ 0 & 1 \\ 1 & 0 \end{bmatrix}, \frac{1}{\sqrt{3}}\begin{bmatrix} 1 & 0 \\ 0 & 1 \\ j & 0 \end{bmatrix}, \frac{1}{\sqrt{3}}\begin{bmatrix} 1 & 0 \\ 0 & 1 \\ -j & 0 \end{bmatrix}, \frac{1}{\sqrt{3}}\begin{bmatrix} 1 & 0 \\ 0 & 1 \\ -1 & 0 \end{bmatrix}.$$

If the fourth port is a port with allocated zero power, both TPMIs in the TPMI pairs of TPMI 6 and TMPI 7, TMPI 8 and TMPI 9, TMPI 10 and TPMI 11, or TPMI 12 and TPMI 13 may reflect similar precoder settings.

UL full power transmission will now be described.

Two restrictions can impede the full power transmission of the PUSCH. The first restriction may arise from limitations on the transmit precoder codebook for UEs equipped with non-coherent or partially coherent antennas. The second limitation may arise from a power allocation rule that requires the UE to distribute power equally across all antenna ports from which it transmits PUSCH with a non-zero power.

Three operational modes may be specified as optional capabilities for UEs aiming for full power transmission of PUSCH. The first mode, termed "fullpower" or "Mode0," may be designed for UEs with fully-rated PAs on all transmission chains (e.g., cap 0 UEs), allowing any antenna selection TPMI to support full power transmission by adjusting the power scaling factor to s=1. The second mode, "fullpowerMode1," may be used for UEs with fully-rated PAs on a subset of Tx chains and/or none (e.g., cap 1 and cap 2 UEs). This mode may introduce new non-antenna selection TPMIs and retain the power scaling factor s from prior configurations. The third mode, "fullpowerMode2," may also be used for UEs with fully-rated PAs on a subset of Tx chains and/or none (e.g., cap 1 and cap 2 UEs). This mode can enable maximum output power delivery either through full power TPMI/TPMI groups with a modified power scaling factor of s=1, and/or through antenna virtualization using a power scaling factor s from prior configurations.

For 3 Tx antenna port devices, these modes may be adapted to enhance their utility for 3 Tx PUSCH transmissions. Mode0, for instance, may allow UEs with fully-rated PAs on all 3 Tx chains (e.g., cap 0 UEs) to support any antenna selection TPMI for full power transmission, where the typical power scaling factor s of $\frac{1}{\sqrt{3}}$ is replaced by 1. Mode1 may allow UEs with fully-rated PAs on a subset of the 3 Tx chains (e.g., cap 2 UEs) or none (e.g., cap 1 UEs), utilizing non-antenna selection TPMIs with a defined power scaling factor s for partial/non-coherent UEs as defined for those TPMIs. The power scaling factor s may be defined as the ratio of a number of antenna ports with a non-zero PUSCH transmission power over a supported maximum number of antenna ports by a 3 Tx UE that is 3. This full power UL transmission may use a small cyclic delay diversity (S-CDD) to ensure coherency across antenna ports by applying relative delays between Tx chains, effectively randomizing the effective channel and preventing destructive interference. Mode2 may allow UEs with fully-rated PAs on a subset of Tx chains (e.g., cap 2 UEs) or none of the 3 Tx chains (e.g., cap 1 UEs) to deliver maximum output power either by indicating specific full power TPMI/TPMI groups with a modified power scaling factor of s=1, or by employing antenna virtualization with the same power scaling factor(s) s as in the codebook.

The TPMI group indication in Mode2 may depend on the UE's PA architecture and its reporting capabilities concerning which TPMIs support full power transmission. These TPMIs can be chosen from all specified 3 Tx codebooks or from specific TPMI groups defined for Mode2 full power operation, adjusting the power scaling factor s from typical values (e.g., $\frac{1}{\sqrt{3}}$, $\frac{1}{\sqrt{6}}$ or $\frac{1}{3}$) to 1 for full power operation. Moreover, the power scaling factor s may be defined as the ratio of the number of antenna ports with a non-zero PUSCH transmission power to the maximum number of antenna ports, which is three for a 3 Tx UE. For example, for a 4 Tx UE, seven TPMI groups {G0, G1, G2, G3, G4, G5, G6} may be designated for Mode2 full power operation. As shown below in Table A, these groups may also be applicable to 3 Tx antenna port devices, albeit with an adjustment in the power scaling factor s from $\frac{1}{2}$ to $\frac{1}{\sqrt{3}}$, to maintain s=1 for full power operations via these groups.

Table A

| ID | TPMI groups |
|----|-------------|
| G0 | $\frac{1}{\sqrt{3}}\begin{bmatrix} 1 \\ 0 \\ 0 \\ 0 \end{bmatrix}$ |

(continued)

| ID | TPMI groups |
|---|---|
| G1 | $\frac{1}{\sqrt{3}}\begin{bmatrix}1\\0\\0\\0\end{bmatrix}, \frac{1}{\sqrt{3}}\begin{bmatrix}0\\0\\1\\0\end{bmatrix}, \frac{1}{\sqrt{3}}\begin{bmatrix}1&0\\0&0\\0&1\\0&0\end{bmatrix}$ |
| G2 | $\frac{1}{\sqrt{3}}\begin{bmatrix}1\\0\\0\\0\end{bmatrix}, \frac{1}{\sqrt{3}}\begin{bmatrix}0\\1\\0\\0\end{bmatrix}, \frac{1}{\sqrt{3}}\begin{bmatrix}0\\0\\1\\0\end{bmatrix}, \frac{1}{\sqrt{3}}\begin{bmatrix}1&0\\0&0\\0&1\\0&0\end{bmatrix}, \frac{1}{\sqrt{3}}\begin{bmatrix}1&0\\0&1\\0&0\\0&0\end{bmatrix}, \frac{1}{\sqrt{3}}\begin{bmatrix}0&0\\1&0\\0&1\\0&0\end{bmatrix}, \frac{1}{\sqrt{3}}\begin{bmatrix}1&0&0\\0&1&0\\0&0&1\\0&0&0\end{bmatrix}$ |
| G3 | $\frac{1}{\sqrt{3}}\begin{bmatrix}1&0\\0&0\\0&1\\0&0\end{bmatrix}, \frac{1}{\sqrt{3}}\begin{bmatrix}1&0\\0&1\\0&0\\0&0\end{bmatrix}, \frac{1}{\sqrt{3}}\begin{bmatrix}0&0\\1&0\\0&1\\0&0\end{bmatrix}, \frac{1}{\sqrt{3}}\begin{bmatrix}1&0&0\\0&1&0\\0&0&1\\0&0&0\end{bmatrix}$ |
| G4 | $\frac{1}{\sqrt{3}}\begin{bmatrix}1\\0\\1\\0\end{bmatrix}, \frac{1}{\sqrt{3}}\begin{bmatrix}1\\0\\-1\\0\end{bmatrix}, \frac{1}{\sqrt{3}}\begin{bmatrix}1\\0\\j\\0\end{bmatrix}, \frac{1}{\sqrt{3}}\begin{bmatrix}1\\0\\-j\\0\end{bmatrix}, \frac{1}{\sqrt{3}}\begin{bmatrix}1&0\\0&0\\0&1\\0&0\end{bmatrix}$ |
| G5 | $\frac{1}{\sqrt{3}}\begin{bmatrix}1\\0\\1\\0\end{bmatrix}, \frac{1}{\sqrt{3}}\begin{bmatrix}1\\0\\-1\\0\end{bmatrix}, \frac{1}{\sqrt{3}}\begin{bmatrix}1\\0\\j\\0\end{bmatrix}, \frac{1}{\sqrt{3}}\begin{bmatrix}1\\0\\-j\\0\end{bmatrix}, \frac{1}{\sqrt{3}}\begin{bmatrix}1&0\\0&0\\0&1\\0&0\end{bmatrix}, \frac{1}{\sqrt{3}}\begin{bmatrix}1&0\\0&1\\0&0\\0&0\end{bmatrix}, \frac{1}{\sqrt{3}}\begin{bmatrix}0&0\\1&0\\0&1\\0&0\end{bmatrix},$ $\frac{1}{\sqrt{3}}\begin{bmatrix}1&0&0\\0&1&0\\0&0&1\\0&0&0\end{bmatrix}$ |
| G6 | $\frac{1}{\sqrt{3}}\begin{bmatrix}1\\0\\1\\0\end{bmatrix}, \frac{1}{\sqrt{3}}\begin{bmatrix}1\\0\\-1\\0\end{bmatrix}, \frac{1}{\sqrt{3}}\begin{bmatrix}1\\0\\j\\0\end{bmatrix}, \frac{1}{\sqrt{3}}\begin{bmatrix}1\\0\\-j\\0\end{bmatrix}, \frac{1}{\sqrt{3}}\begin{bmatrix}0\\1\\0\\1\end{bmatrix}, \frac{1}{\sqrt{3}}\begin{bmatrix}0\\1\\0\\-1\end{bmatrix}, \frac{1}{\sqrt{3}}\begin{bmatrix}0\\1\\0\\j\end{bmatrix}, \frac{1}{\sqrt{3}}\begin{bmatrix}0\\1\\0\\-j\end{bmatrix},$ $\frac{1}{\sqrt{3}}\begin{bmatrix}1&0\\0&1\\0&0\\0&0\end{bmatrix}, \frac{1}{\sqrt{3}}\begin{bmatrix}1&0\\0&0\\0&1\\0&0\end{bmatrix},$ $\frac{1}{\sqrt{3}}\begin{bmatrix}1&0\\0&0\\0&0\\0&1\end{bmatrix}, \frac{1}{\sqrt{3}}\begin{bmatrix}0&0\\1&0\\0&1\\0&0\end{bmatrix}, \frac{1}{\sqrt{3}}\begin{bmatrix}0&0\\1&0\\0&0\\0&1\end{bmatrix}, \frac{1}{\sqrt{3}}\begin{bmatrix}0&0\\0&0\\1&0\\0&1\end{bmatrix}, \frac{1}{\sqrt{3}}\begin{bmatrix}1&0&0\\0&1&0\\0&0&1\\0&0&0\end{bmatrix}$ |

According to an embodiment, with 3-port SRS resources, a TPMI group table can be defined for 3 Tx UEs according to Table B, shown below.

Table B

| ID | TPMI groups |
|---|---|
| G0 | $\frac{1}{\sqrt{3}}\begin{bmatrix}1\\0\\0\end{bmatrix}$ |
| G1 | $\frac{1}{\sqrt{3}}\begin{bmatrix}1\\0\\0\end{bmatrix}, \frac{1}{\sqrt{3}}\begin{bmatrix}0\\0\\1\end{bmatrix}, \frac{1}{\sqrt{3}}\begin{bmatrix}1&0\\0&0\\0&1\end{bmatrix}$ |
| G2 | $\frac{1}{\sqrt{3}}\begin{bmatrix}1\\0\\0\end{bmatrix}, \frac{1}{\sqrt{3}}\begin{bmatrix}0\\1\\0\end{bmatrix}, \frac{1}{\sqrt{3}}\begin{bmatrix}0\\0\\1\end{bmatrix}, \frac{1}{\sqrt{3}}\begin{bmatrix}1&0\\0&0\\0&1\end{bmatrix}, \frac{1}{\sqrt{3}}\begin{bmatrix}1&0\\0&1\\0&0\end{bmatrix}, \frac{1}{\sqrt{3}}\begin{bmatrix}0&0\\1&0\\0&1\end{bmatrix},$ $\frac{1}{\sqrt{3}}\begin{bmatrix}1&0&0\\0&1&0\\0&0&1\end{bmatrix}$ |
| G3 | $\frac{1}{\sqrt{3}}\begin{bmatrix}1&0\\0&0\\0&1\end{bmatrix}, \frac{1}{\sqrt{3}}\begin{bmatrix}1&0\\0&1\\0&0\end{bmatrix}, \frac{1}{\sqrt{3}}\begin{bmatrix}0&0\\1&0\\0&1\end{bmatrix}, \frac{1}{\sqrt{3}}\begin{bmatrix}1&0&0\\0&1&0\\0&0&1\end{bmatrix}$ |
| G4 | $\frac{1}{\sqrt{3}}\begin{bmatrix}1\\0\\1\end{bmatrix}, \frac{1}{\sqrt{3}}\begin{bmatrix}1\\0\\-1\end{bmatrix}, \frac{1}{\sqrt{3}}\begin{bmatrix}1\\0\\j\end{bmatrix}, \frac{1}{\sqrt{3}}\begin{bmatrix}1\\0\\-j\end{bmatrix}, \frac{1}{\sqrt{3}}\begin{bmatrix}1&0\\0&0\\0&1\end{bmatrix}$ |
| G5 | $\frac{1}{\sqrt{3}}\begin{bmatrix}1\\0\\1\end{bmatrix}, \frac{1}{\sqrt{3}}\begin{bmatrix}1\\0\\-1\end{bmatrix}, \frac{1}{\sqrt{3}}\begin{bmatrix}1\\0\\j\end{bmatrix}, \frac{1}{\sqrt{3}}\begin{bmatrix}1\\0\\-j\end{bmatrix}, ,$ $\frac{1}{\sqrt{3}}\begin{bmatrix}1&0\\0&0\\0&1\end{bmatrix}, \frac{1}{\sqrt{3}}\begin{bmatrix}1&0\\0&1\\0&0\end{bmatrix}, \frac{1}{\sqrt{3}}\begin{bmatrix}0&0\\1&0\\0&1\end{bmatrix}, \frac{1}{\sqrt{3}}\begin{bmatrix}1&0&0\\0&1&0\\0&0&1\end{bmatrix}$ |
| G6 | $\frac{1}{\sqrt{3}}\begin{bmatrix}1\\0\\1\end{bmatrix},$ $\frac{1}{\sqrt{3}}\begin{bmatrix}1\\0\\-1\end{bmatrix}, \frac{1}{\sqrt{3}}\begin{bmatrix}1\\0\\j\end{bmatrix}, \frac{1}{\sqrt{3}}\begin{bmatrix}1\\0\\-j\end{bmatrix}, \frac{1}{\sqrt{3}}\begin{bmatrix}1&0\\0&1\\0&0\end{bmatrix}, \frac{1}{\sqrt{3}}\begin{bmatrix}1&0\\0&1\\0&0\end{bmatrix}, \frac{1}{\sqrt{3}}\begin{bmatrix}0&0\\1&0\\0&1\end{bmatrix},$ $\frac{1}{\sqrt{3}}\begin{bmatrix}1&0&0\\0&1&0\\0&0&1\end{bmatrix}$ |

The antenna virtualization approach in Mode2 may be implemented through the configuration of multiple SRS resources that have varying numbers of ports. This virtualization by the UE may involve up to four SRS resources configured within one set for a 3 Tx UE. Each SRS resource can comprise 1, 2, or 4 ports. Specifically, a 4 port SRS resource can be adapted for a 3 Tx port UL transmission where the allocated power to one specific port is consistently zero.

Furthermore, with a 3 port SRS resource, the number of each SRS resource port can be 1, 2, or 3. The power scaling factor s may be defined based on the operational configuration of the UE and the SRS resources. The power scaling factor s may be defined as the ratio of the number of antenna ports with a non-zero PUSCH transmission power to the number of SRS ports. This number of SRS ports can be associated with an SRS resource as indicated by a service radio indicator (SRI) field in a DCI format scheduling the PUSCH transmission. This scenario may be applied if more than one SRS resource is configured in the *SRS-ResourceSet* with usage designated for "codebook", or if it is indicated by a Type 1 configured grant. Additionally or alternatively, the number of SRS ports may be linked to the single configured SRS resource if only one SRS resource is configured in the *SRS-ResourceSet* with its usage set to "codebook".

The power scaling factor s may be set to 1 if an SRS resource with a single port is indicated by an SRI field in a DCI format scheduling the PUSCH Tx when more than one SRS resource is present in the *SRS-ResourceSet* with usage set to "codebook". This scenario may also apply if indicated by a Type 1 configured grant, or if only one SRS resource with a single port is available in the *SRS-ResourceSet* with usage set to "codebook". Accordingly, this method of power scaling may ensure that the power transmitted is appropriately balanced across the active antennas, optimizing the efficiency and effectiveness of the Tx based on the available SRS configuration and the specific requirements of the Tx scenario.

SRS Tx will now be described.

For UE SRS transmissions featuring 3 Tx antenna ports, the incorporation of codebook-based and antenna switching SRS resources may necessitate an adjustment of the SRS transmission strategies, given the configurations made possible with three antenna ports. While non-codebook based SRS resources may utilize a single-port configuration which does not require enhancements for SRS transmission, the complexities associated with codebook based and antenna switching SRS resources may necessitate configurations based on a specific number of antenna ports designated for UL transmission using, for example, an SRS sequence of each antenna port $p_i$, a frequency domain start position of each antenna port $p_i$, and/or a power scaling factor s of each antenna port $p_i$.

For a 3 Tx antenna port device, the SRS transmission can be efficiently managed with minimal impact on previously-used configurations. This is achievable by repurposing a configured four port SRS resource, wherein the power allocated to one specific port remains consistently zero. The determination of which port has zero allocated power can be governed by several methods: a pre-defined rule such as always selecting the fourth port, configurations set by the network's gNB, or decisions made by the UE itself. The criteria for selecting the port with zero power may involve balancing performance, taking into account the UE's PA architecture, port coherency capability, and the spatial characteristics of the channel, with the overhead required for signaling this selection.

When the selection of the port to have zero power is made by the gNB, it can be communicated to the UE semi-statically through RRC configurations or dynamically through a MAC control element (CE) and/or DCI. This indication might necessitate the introduction of a new RRC parameter or the reuse of an existing DCI/MAC CE field, formatted either as a codepoint or a bitmap, with the codepoint format generally incurring less signaling overhead. Alternatively, the UE may autonomously decide which port will have zero power and communicate this decision back to the gNB via UE capability signaling.

To simplify the design and ensure standardization across different deployments, a port re-indexing procedure may be used. This procedure may ensure that regardless of which port is initially selected to have zero power, it is consistently re-indexed as port 3 (e.g., the fourth port). The remaining active ports may then be re-indexed in sequential order from port 0 to port 2.

An additional or alternative strategy for managing SRS transmissions in a 3 Tx antenna port device may involve specifying a 3 port SRS resource. This approach may be aimed at determining the SRS sequence for each antenna port $p_i$, the frequency domain start position for each antenna port $p_i$, and/or the power scaling factor s for each antenna port $p_i$. Such a strategy ensures that the SRS configurations can be integrated with the existing network frameworks for 3 Tx antenna port configurations.

A cyclic shift will now be described.

According to an embodiment, the SRS resource sequence for a UE may be generated based on a specific Zadoff-Chu sequence, designated as $r_{u,v}(n)$, allocated to the UE. When the UE transmits SRS from multiple antenna ports, the sequence transmitted from each antenna port may employ a different time domain cyclic shift of the sequence to ensure effective separation and clarity of signals from each port. The sequence transmitted from an antenna port $p_i$ could be defined by applying a cyclic shift $\alpha_i$ on the sequence $r_{u,v}(n)$, which may be expressed as Equation 1:

$$r^{(p_i)}(n, l') = e^{j\alpha_i n} r_{u,v}(n) \quad 0 \leq n \leq M_{\text{sc},b}^{\text{SRS}} - 1 \text{ and } l' \in \left\{0, 1, \dots, N_{\text{symb}}^{\text{SRS}} - 1\right\}$$

$$\dots \text{Equation 1}$$

where $M_{\text{sc},b}^{\text{SRS}}$ is the length of a sequence that is equal to the number of allocated resource elements for SRS transmission, $N_{\text{symb}}^{\text{SRS}}$ is a number of SRS symbols, and $\alpha_i$ is the time domain shift for antenna port $p_i$ that is given as Equation 2:

$$\alpha_i = 2\pi \left( \frac{n_{\mathrm{SRS}}^{\mathrm{cs},i}}{n_{\mathrm{SRS}}^{\mathrm{cs,max}}} + \frac{f_{\mathrm{csh}}\left(n_{\mathrm{f}}, n_{\mathrm{s,f}}^{\mu}, l'\right)}{K n_{\mathrm{SRS}}^{\mathrm{cs,max}}} \right)$$

... Equation 2

where $n_{\mathrm{SRS}}^{\mathrm{cs,max}}$ is the maximum number of cyclic shifts given by Table 6.4.1.4.2-1 in TS 38.211, shown below,

$f_{\mathrm{csh}}\left(n_{\mathrm{f}}, n_{\mathrm{s,f}}^{\mu}, l'\right)$ represents a cyclic shift hopping configuration, and $K$ represents *hoppingFinerGranularity.*

Table 6.4.1.4.2-1: Maximum number of cyclic shifts $n_{\mathrm{SRS}}^{\mathrm{cs},max}$ as a function of $K_{\mathrm{transmission\ configuration\ (TC)}}$ [TS 38.211].

| $K_{\mathrm{TC}}$ | $n_{\mathrm{SRS}}^{\mathrm{cs},max}$ |
|---|---|
| 2 | 8 |
| 4 | 12 |
| 8 | 6 |

As seen in Table 6.4.1.4.2-1 in TS 38.211, the maximum number of cyclic shifts available to the UE may depend on the configured transmission comb size $K_{\mathrm{TC}}$ (e.g., SRS transmission on every $K_{\mathrm{TC}}$ subcarrier) that provides an opportunity of frequency multiplexing for multiple UEs that are configured with the same subcarrier offset. For example, $n_{\mathrm{SRS}}^{\mathrm{cs,max}} = 8$ cyclic shifts may be available when the transmission comb size of $K_{\mathrm{TC}} = 2$ is configured, $n_{\mathrm{SRS}}^{\mathrm{cs,max}} = 12$ cyclic shifts may be available when the transmission comb size of $K_{\mathrm{TC}} = 4$ is configured, and $n_{\mathrm{SRS}}^{\mathrm{cs,max}} = 6$ cyclic shifts may be available when the transmission comb size of $K_{\mathrm{TC}} = 8$ is configured.

The $n_{\mathrm{SRS}}^{\mathrm{cs},i}$ may be the number of cyclic shifts for antenna port $p_i$ and may be expressed as Equation 3:

$$n_{\mathrm{SRS}}^{\mathrm{cs},i} = \begin{cases} \left( n_{\mathrm{SRS}}^{\mathrm{cs}} + \frac{n_{SRS}^{\mathrm{cs,max}} \lfloor (p_i - 1000)/4 \rfloor}{N_{ap}^{SRS}/4} \right) \bmod n_{\mathrm{SRS}}^{\mathrm{cs,max}} & N_{ap}^{SRS} = 8 \text{ and } n_{\mathrm{SRS}}^{\mathrm{cs,max}} = 6 \\ \left( n_{\mathrm{SRS}}^{\mathrm{cs}} + \frac{n_{SRS}^{\mathrm{cs,max}} \lfloor (p_i - 1000)/2 \rfloor}{N_{ap}^{SRS}/2} \right) \bmod n_{\mathrm{SRS}}^{\mathrm{cs,max}} & N_{ap}^{SRS} = 4 \text{ and } n_{\mathrm{SRS}}^{\mathrm{cs,max}}=6 \text{ or } N_{ap}^{SRS} = 8 \text{ and } n_{\mathrm{SRS}}^{\mathrm{cs,max}}=12 \\ \left( n_{\mathrm{SRS}}^{\mathrm{cs}} + \frac{n_{SRS}^{\mathrm{cs,max}} (p_i - 1000)}{N_{ap}^{SRS}} \right) \bmod n_{\mathrm{SRS}}^{\mathrm{cs,max}} & otherwise \end{cases}$$

... Equation 3

where $n_{\mathrm{SRS}}^{\mathrm{cs}} \in \{0, 1, \dots, n_{\mathrm{SRS}}^{\mathrm{cs,max}} - 1\}$ is included in the higher layer parameter *transmissionComb,* and $N_{ap}^{SRS}$ is the number of SRS ports given by higher-layer parameter *nrofSRS-Ports.*

With the emergence of devices equipped with 3 Tx antenna ports, determining the SRS sequence for each antenna port $p_i$ may first require the cyclic shift $\alpha_i$ to be derived as dependent on a $n_{\mathrm{SRS}}^{\mathrm{cs},i}$ determination. With a 4 port SRS resource, there may be multiple alternative approaches for allocating cyclic shifts to a set of three antenna ports (e.g., $n_{\mathrm{SRS}}^{\mathrm{cs},i}$ $i =$ 0,1,2). First, cyclic shifts may be allocated to three antenna ports based on the actually transmitted port index (e.g., determined via a re-indexing procedure) where one cyclic shift can be reserved for another SRS transmission, contrasting with configurations for 4 Tx transmission.

For instance, when the maximum number of cyclic shifts $n_{\mathrm{SRS}}^{\mathrm{cs,max}}=8$ (e.g., transmission comb size $K_{TC} = 2$ as in Table 6.4.1.4.2-1 in TS 38.211), the allocated cyclic shifts gap for different antenna ports can be two for a 4 port SRS resource. Here, for a 3 Tx transmission, one of the cyclic shifts could be reserved for other uses or for another UE's SRS transmissions. For example, for a UE that is configured with $n_{\mathrm{SRS}}^{\mathrm{cs}} = 0$ through the higher layer parameter *transmissionComb,* the allocated cyclic shifts for a 4 Tx port transmission may be $\{0,2,4,6\} \times \frac{2\pi}{8}$, meaning for a 3 Tx port transmission, the allocated cyclic shifts would be $\{0,2,4\} \times \frac{2\pi}{8}$ while the cyclic shift of $\{6\} \times \frac{2\pi}{8}$ can be reserved.

Similarly, when $n_{\mathrm{SRS}}^{\mathrm{cs,max}} = 12$ (e.g., transmission comb size $K_{TC}$ = 4 as in Table 6.4.1.4.2-1 in TS 38.211), the allocated cyclic shifts gap for different antenna ports can be three for a 4 port SRS resource where for a 3 Tx transmission, one cyclic shift can be reserved for another usage or another UE SRS transmission. For example, for a UE that is configured with $n_{\mathrm{SRS}}^{\mathrm{cs}} = 0$ through the higher layer parameter *transmissionComb,* the allocated cyclic shifts for 4 Tx port transmission may be $\{0,3,6,9\} \times \frac{2\pi}{12}$, meaning for a 3 Tx port transmission, the allocated cyclic shifts would be $\{0,3,6\} \times \frac{2\pi}{12}$ while the cyclic shift of $\{9\} \times \frac{2\pi}{12}$ can be reserved.

Furthermore, when $n_{\mathrm{SRS}}^{\mathrm{cs,max}} = 6$ (e.g., transmission comb size $K_{TC}$ = 8 as in Table 6.4.1.4.2-1 in TS 38.211), the allocated cyclic shifts gap for different antenna ports can be three for a 4 port SRS resource. For example, the allocated cyclic shifts for a 4 Tx port transmission may be $\{0,0,3,3\} \times \frac{2\pi}{6}$ and can also be applied for a 3 Tx port transmission as $\{0,0,3\} \times \frac{2\pi}{6}$. Although in some systems with $n_{\mathrm{SRS}}^{\mathrm{cs,max}} = 6$, there may already be some cyclic shift reserved. However, in such a design, the frequency domain allocation of SRS sequences of different antenna ports may invariably incorporate gaps of a half comb size (e.g., $K_{TC}/2$).

Thus, $n_{\mathrm{SRS}}^{\mathrm{cs,}i}$ for $i$ = 0,1,2 in 3 Tx transmission can be defined according to Equation 4, below, using the value $N_{ap}^{SRS} = 4$:

$$n_{\mathrm{SRS}}^{\mathrm{cs,}i} = \begin{cases} \left( n_{\mathrm{SRS}}^{\mathrm{cs}} + \dfrac{n_{\mathrm{SRS}}^{\mathrm{cs,max}}(p_i - 1000)}{N_{ap}^{SRS}} \right) \bmod n_{\mathrm{SRS}}^{\mathrm{cs,max}}, & N_{ap}^{SRS} = 4 \text{ and } n_{\mathrm{SRS}}^{\mathrm{cs,max}} = 8 \; or \; 12 \\[3mm] \left( n_{\mathrm{SRS}}^{\mathrm{cs}} + \dfrac{n_{\mathrm{SRS}}^{\mathrm{cs,max}}\lfloor (p_i - 1000)/2 \rfloor}{N_{ap}^{SRS}/2} \right) \bmod n_{\mathrm{SRS}}^{\mathrm{cs,max}}, & N_{ap}^{SRS} = 4 \text{ and } n_{\mathrm{SRS}}^{\mathrm{cs,max}} = 6 \end{cases}$$

$$\ldots \text{Equation 4.}$$

According to an embodiment, with a 4 port SRS resource, the cyclic shifts may be allocated to three antenna ports with a maximum separation in order to reduce the potential for misdetection.

For example, when the maximum number of cyclic shifts $n_{\mathrm{SRS}}^{\mathrm{cs,max}}$ is 8, the cyclic shifts between different antenna ports in a 3 Tx transmission system can be separated by three positions. This represents the greatest possible separation to mitigate the likelihood of misdetection. For example, for a UE that is configured with $n_{\mathrm{SRS}}^{\mathrm{cs}} = 0$ through the higher layer parameter *transmissionComb,* the allocated cyclic shifts for a 3 Tx port transmission may be $\{0,3,6\} \times \frac{2\pi}{8}$, with a maximum separation of three cyclic shifts.

Similarly, when the maximum number of cyclic shifts $n_{\mathrm{SRS}}^{\mathrm{cs,max}}$ is 12, the cyclic shift gap for the 3 Tx port transmission can be set to four, again ensuring the greatest possible separation to avoid misdetection. For example, for a UE that is configured with $n_{\mathrm{SRS}}^{\mathrm{cs}} = 0$ through the higher layer parameter *transmissionComb,* the allocated cyclic shifts for a 3 Tx port transmission may be $\{0,4,8\} \times \frac{2\pi}{12}$, with a maximum separation of four cyclic shifts.

Furthermore, when the maximum number of cyclic shifts $n_{\mathrm{SRS}}^{\mathrm{cs,max}}$ is 6, the cyclic shift gap for the 3 Tx port transmission can be two, which is the maximum possible separation under this configuration. For example, for a UE that is configured with $n_{\mathrm{SRS}}^{\mathrm{cs}} = 0$ through the higher layer parameter *transmissionComb,* the allocated cyclic shifts for a 3 Tx port transmission may be $\{0,2,4\} \times \frac{2\pi}{6}$ with a maximum separation of two cyclic shifts.

Thus, $n_{\mathrm{SRS}}^{\mathrm{cs},i}$ for *i* = 0,1,2 in a 3 Tx transmission can be defined according to Equation 5, below, using the value $N_{ap}^{SRS} = 4$ :

$$
n_{\mathrm{SRS}}^{\mathrm{cs},i} = \begin{cases} \left( \left( n_{\mathrm{SRS}}^{\mathrm{cs}} + \frac{(n_{\mathrm{SRS}}^{\mathrm{cs,max}} + 1)(p_i - 1000)}{N_{ap}^{SRS}}(p_i - 1000) \right) \mod n_{\mathrm{SRS}}^{\mathrm{cs,max}}, & N_{ap}^{SRS} = 4 \text{ and } n_{\mathrm{SRS}}^{\mathrm{cs,max}} = 8 \\ \left( n_{\mathrm{SRS}}^{\mathrm{cs}} + \frac{n_{SRS}^{cs,max}(p_i - 1000)}{N_{ap}^{SRS} - 1} \right) \mod n_{\mathrm{SRS}}^{\mathrm{cs,max}}, & N_{ap}^{SRS} = 4 \text{ and } n_{\mathrm{SRS}}^{\mathrm{cs,max}} = 6,12 \end{cases}
$$

$$\dots \text{ Equation 5.}$$

According to an embodiment, the design may use $n_{\mathrm{SRS}}^{\mathrm{cs,max}} = 6$ for $N_{ap}^{SRS} = 4$, where only two cyclic shifts with a maximum possible separation are used and the remaining available cyclic shift(s) are reserved. As previously mentioned, with such a design, the frequency domain allocation of the SRS sequences for different antenna ports may consistently incorporate a gap, typically half the comb size (e.g., $K_{\mathrm{TC}}/2$). This concept may be further discussed when detailing the determination of the frequency domain starting position of the SRS sequence for each antenna port. In this design, the allocated cyclic shifts for a 3 Tx port transmission may be {0 ,6} (e.g., more specifically {0, 0, 6} for the three ports case) with $n_{\mathrm{SRS}}^{\mathrm{cs,max}} = 12$, {0, 4} (e.g., more specifically {0, 0, 4} for the three ports case) with $n_{\mathrm{SRS}}^{\mathrm{cs,max}} = 8$, and {0, 3} (e.g., more specifically {0, 0, 3} for the three ports case) with $n_{\mathrm{SRS}}^{\mathrm{cs,max}} = 6$. That is, $n_{\mathrm{SRS}}^{\mathrm{cs},i}$ for *i* = 0,1,2 in a 3 Tx transmission can be defined according to Equation 6, below, using the value $N_{ap}^{SRS} = 4$ :

$$
n_{\mathrm{SRS}}^{\mathrm{cs},i} = \begin{cases} \left( \left( n_{\mathrm{SRS}}^{\mathrm{cs}} + \frac{n_{\mathrm{SRS}}^{\mathrm{cs,max}}\lfloor (p_i - 1000)/2 \rfloor}{N_{ap}^{SRS}/2} \right) \mod n_{\mathrm{SRS}}^{\mathrm{cs,max}}, & N_{ap}^{SRS} = 4 \text{ and } n_{\mathrm{SRS}}^{\mathrm{cs,max}} = 12 \\ \left( n_{\mathrm{SRS}}^{\mathrm{cs}} + \frac{n_{\mathrm{SRS}}^{\mathrm{cs,max}}\lfloor (p_i - 1000)/2 \rfloor}{N_{ap}^{SRS}/2} \right) \mod n_{\mathrm{SRS}}^{\mathrm{cs,max}}, & N_{ap}^{SRS} = 4 \text{ and } n_{\mathrm{SRS}}^{\mathrm{cs,max}} = 8 \\ \left( n_{\mathrm{SRS}}^{\mathrm{cs}} + \frac{n_{SRS}^{cs,max}\lfloor ((p_i - 1000) - 1000)/2 \rfloor}{N_{ap}^{SRS}/2} \right) \mod n_{\mathrm{SRS}}^{\mathrm{cs,max}}, & N_{ap}^{SRS} = 4 \text{ and } n_{\mathrm{SRS}}^{\mathrm{cs,max}} = 6 \end{cases}
$$

$$\dots \text{ Equation 6.}$$

According to an embodiment, only two cyclic shifts may be allocated with separation ("sep") while the remaining available cyclic shifts are reserved. Thus, the allocated cyclic shifts for 3 Tx port transmission would be $\{0, sep\} \times \frac{2\pi}{n_{\mathrm{SRS}}^{\mathrm{cs,max}}}$ for all $n_{\mathrm{SRS}}^{\mathrm{cs,max}}$ of 6, 8 and 12. That is $n_{\mathrm{SRS}}^{\mathrm{cs},i}$ for *i* = 0,1,2 in a 3 Tx transmission can be defined using the value $N_{ap}^{SRS} = 4$ according to Equation 7, below:

$$n_{\text{SRS}}^{\text{cs},i} = \begin{cases} \left( n_{\text{SRS}}^{\text{cs}} + \dfrac{n_{\text{SRS}}^{\text{cs,max}} \lfloor (p_i - 1000)/2 \rfloor}{3 N_{ap}^{SRS}/s} \right) \mod n_{\text{SRS}}^{\text{cs,max}}, & N_{ap}^{SRS} = 4 \text{ and } n_{\text{SRS}}^{\text{cs,max}} = 12 \\[3ex] \left( n_{\text{SRS}}^{\text{cs}} + \dfrac{n_{\text{SRS}}^{\text{cs,max}} \lfloor (p_i - 1000)/2 \rfloor}{2 N_{ap}^{SRS}/s} \right) \mod n_{\text{SRS}}^{\text{cs,max}}, & N_{ap}^{SRS} = 4 \text{ and } n_{\text{SRS}}^{\text{cs,max}} = 8 \\[3ex] \left( n_{\text{SRS}}^{\text{cs}} + \dfrac{n_{SRS}^{cs,max} \lfloor (p_i - 1000)/2 \rfloor}{2(N_{ap}^{SRS} - 1)/s} \right) \mod n_{\text{SRS}}^{\text{cs,max}}, & N_{ap}^{SRS} = 4 \text{ and } n_{\text{SRS}}^{\text{cs,max}} = 6 \end{cases}$$

$$\dots \text{Equation 7.}$$

As described above, the frequency domain allocation of the SRS sequences across different antenna ports may consistently maintain gap considerations, ensuring orthogonality and reducing the risk of misdetection.

According to an embodiment, when a 3-port SRS resource is specified and configured, a previously-used design can be followed to determine the SRS sequence for each antenna port $p_i$. The cyclic shifts may be allocated to three antenna ports with a maximum separation in order to reduce the potential for misdetection.

For example, when the maximum number of cyclic shifts $n_{\text{SRS}}^{\text{cs,max}}$ is 8, the allocated cyclic shifts gap for different antenna ports for the 3 Tx transmission can be set to three, which is the maximum possible separation to reduce a risk of misdirection. For example, for a UE that is configured with $n_{\text{SRS}}^{\text{cs}} = 0$ through the higher layer parameter *transmissionComb,* the allocated cyclic shifts set for a 3 Tx port transmission may be $\{0,3,6\} \times \dfrac{2\pi}{8}$, with a maximum separation of three cyclic shifts.

Similarly, when the maximum number of cyclic shifts $n_{\text{SRS}}^{\text{cs,max}}$ is 12, the allocated cyclic shifts gap for different antenna ports for the 3 Tx transmission can be set to four, which is a maximum possible separation to reduce a risk of misdirection. For example, for a UE that is configured with $n_{\text{SRS}}^{\text{cs}} = 0$ through the higher layer parameter *transmissionComb,* the allocated cyclic shifts set for the 3 Tx port transmission may be $\{0,4,8\} \times \dfrac{2\pi}{12}$, with a maximum separation of four cyclic shifts

Furthermore, when the maximum number of cyclic shifts $n_{\text{SRS}}^{\text{cs,max}}$ is 6, the allocated cyclic shifts gap for different antenna ports for the 3 Tx transmission can be set to two, which is a maximum possible separation to reduce a risk of misdirection. For example, for a UE that is configured with $n_{\text{SRS}}^{\text{cs}} = 0$ through the higher layer parameter *transmissionComb,* the allocated cyclic shifts set for the 3 Tx port transmission may be $\{0,2,4\} \times \dfrac{2\pi}{6}$, with a maximum separation of two cyclic shifts

Therefore, the allocation of cyclic shifts to a set of 3 Tx antenna ports (e.g., $n_{\text{SRS}}^{\text{cs},i}$ $i = 0,1,2$) can be defined according to Equation 8, below, using the value $N_{ap}^{SRS} = 3$:

$$n_{\text{SRS}}^{\text{cs},i} = \begin{cases} \left( n_{\text{SRS}}^{\text{cs}} + \dfrac{n_{SRS}^{cs,max}(p_i - 1000)}{N_{ap}^{SRS}} \right) \mod n_{\text{SRS}}^{\text{cs,max}}, & N_{ap}^{SRS} = 3 \text{ and } n_{\text{SRS}}^{\text{cs,max}} = 6 \text{ or } 12 \\[3ex] \left( n_{\text{SRS}}^{\text{cs}} + \dfrac{(n_{SRS}^{cs,max} + 1)(p_i - 1000)}{N_{ap}^{SRS}} \right) \mod n_{\text{SRS}}^{\text{cs,max}}, & N_{ap}^{SRS} = 3 \text{ and } n_{\text{SRS}}^{\text{cs,max}} = 8 \end{cases}$$

$$\dots \text{Equation 8.}$$

Additionally, for both 3 port and 4 port SRS resources, a transmission comb size of $K_{TC} = 3$ may be used following the number of antenna ports with a non-zero Tx power (e.g., $\widehat{N}_{ap}^{SRS} = 3$, where $\widehat{N}_{ap}^{SRS}$ is the number of SRS ports that are actually used for transmission among the ones given by the higher-layer parameter *nrofSRS-Ports*). The proposed value of $K_{TC}$ = 3 may represent the minimum comb size value to address a worst-case scenario where the same cyclic shift is allocated to all SRS antenna ports and hence the orthogonality of SRS sequences of each antenna port is achieved only through frequency division multiplexing (FDM) (e.g., each antenna port transmits the same SRS sequence but on a different comb offset).

Generally, a transmission comb size can be $K_{TC} \geq 3$. For example, a specific design may be $K_{TC}$ = 3m where $m$ is an integer that is greater than or equal to one. A corresponding maximum number of cyclic shifts $n_{\text{SRS}}^{\text{cs,max}}$ may also be specified for 3 Tx antenna port devices. The candidate values of such $n_{\text{SRS}}^{\text{cs,max}}$ for 3-port SRS resources can be 6 and 12, as these are integer multiples of the number of antenna ports with a non-zero Tx power (e.g., $\widehat{N}_{ap}^{SRS} = 3$) and/or the proposed comb size value (e.g., $K_{TC}$ = 3). As a result, allocation of cyclic shifts to different ports can be done with minimal impact on the 3GPP Specification by reusing equations.

Frequency domain starting position will now be described.

The frequency domain starting position of the SRS sequence for the $i$th antenna port of the SRS resource with a non-zero power may be determined using Equation 9, below:

$$k_0^{(p_i)} = \bar{k}_0^{(p_i)} + n_{\text{offset}}^{\text{FH}} + n_{\text{offset}}^{\text{RPFS}}$$

$$\dots \text{Equation 9}$$

where $n_{\text{offset}}^{\text{FH}}$ and $n_{\text{offset}}^{\text{RPFS}}$ are frequency domain offsets due to *frequency hopping* and resource block (RB) level partial frequency sounding configurations, as provided by Equation 10, below:

$$\bar{k}_0^{(p_i)} = n_{\text{shift}}N_{\text{sc}}^{\text{RB}} + \left(k_{\text{TC}}^{(p_i)} + k_{\text{offset}}^{l'}\right) + f_{\text{coh}}(n_{\text{f}}, n_{\text{s,f}}^{\mu}, l') \bmod K_{\text{TC}}$$

$$\dots \text{Equation 10}$$

where $n_{\text{shift}}$ is a frequency domain shift that adjusts the SRS allocation with respect to the reference point grid and is included in the higher-layer parameter *freqDomainShift*, $N_{sc}^{RB}$ is a number of subcarriers in an RB, $k_{\text{offset}}^{l'}$ represents a frequency domain offset due to an *SRS-PosResource* configuration given by Table 6.4.1.4.3-2 in TS 38.211, shown below, $f_{\text{coh}}(n_{\text{f}}, n_{\text{s,f}}^{\mu}, l')$ represents a comb offset hopping configuration, and $k_{\text{TC}}^{(p_i)}$ is defined based on Equation 11, below:

$$k_{\text{TC}}^{(p_i)} = \begin{cases} \left(\bar{k}_{\text{TC}} + 3K_{\text{TC}}/4\right) \bmod K_{\text{TC}} & \text{if } \bar{N}_{\text{ap}}^{\text{SRS}} = 8, \bar{p}_i \in \{1003, 1007\}, \text{ and } n_{\text{SRS}}^{\text{cs,max}} = 6 \\ \left(\bar{k}_{\text{TC}} + K_{\text{TC}}/2\right) \bmod K_{\text{TC}} & \text{if } \bar{N}_{\text{ap}}^{\text{SRS}} = 8, \bar{p}_i \in \{1002, 1006\}, \text{ and } n_{\text{SRS}}^{\text{cs,max}} = 6 \\ \left(\bar{k}_{\text{TC}} + K_{\text{TC}}/4\right) \bmod K_{\text{TC}} & \text{if } \bar{N}_{\text{ap}}^{\text{SRS}} = 8, \bar{p}_i \in \{1001, 1005\}, \text{ and } n_{\text{SRS}}^{\text{cs,max}} = 6 \\ \left(\bar{k}_{\text{TC}} + K_{\text{TC}}/2\right) \bmod K_{\text{TC}} & \text{if } \bar{N}_{\text{ap}}^{\text{SRS}} = 8, \bar{p}_i \in \{1001, 1003, 1005, 1007\}, \text{ and } n_{\text{SRS}}^{\text{cs,max}} = 12 \\ \left(\bar{k}_{\text{TC}} + K_{\text{TC}}/2\right) \bmod K_{\text{TC}} & \text{if } \bar{N}_{\text{ap}}^{\text{SRS}} = 8, \bar{p}_i \in \{1001, 1003, 1005, 1007\}, n_{\text{SRS}}^{\text{cs,max}} = 8, \text{ and } n_{\text{SRS}}^{\text{cs}} \geq n_{\text{SRS}}^{\text{cs,max}}/2 \\ \left(\bar{k}_{\text{TC}} + K_{\text{TC}}/2\right) \bmod K_{\text{TC}} & \text{if } \bar{N}_{\text{ap}}^{\text{SRS}} = 4, \bar{p}_i \in \{1001, 1003\}, \text{ and } n_{\text{SRS}}^{\text{cs,max}} = 6 \\ \left(\bar{k}_{\text{TC}} + K_{\text{TC}}/2\right) \bmod K_{\text{TC}} & \text{if } \bar{N}_{\text{ap}}^{\text{SRS}} = 4, \bar{p}_i \in \{1001, 1003\}, n_{\text{SRS}}^{\text{cs,max}} \in \{8, 12\}, \text{and } n_{\text{SRS}}^{\text{cs}} \geq n_{\text{SRS}}^{\text{cs,max}}/2 \\ \bar{k}_{\text{TC}} & \text{otherwise} \end{cases}$$

$$\dots \text{Equation 11}$$

where $\bar{k}_{\text{TC}} \in \{0,1, ..., K_{\text{TC}} - 1\}$ is a transmission comb offset that is included in the higher-layer parameter *transmission-Comb*. To illustrate, for a 4-port SRS resource, $k_{\text{TC}}^{(p_i)}$ may be determined based on Equation 12, below:

$$k_{\mathrm{TC}}^{(p_i)} = \begin{cases} \left(\bar{k}_{\mathrm{TC}} + K_{\mathrm{TC}}/2\right) \bmod K_{\mathrm{TC}} & p_i \in \{1001, 1003\}, \text{ and } n_{\mathrm{SRS}}^{\mathrm{cs,max}} = 6 \\ \left(\bar{k}_{\mathrm{TC}} + K_{\mathrm{TC}}/2\right) \bmod K_{\mathrm{TC}} & p_i \in \{1001, 1003\}, n_{\mathrm{SRS}}^{\mathrm{cs,max}} \in \{8, 12\} \text{ and } n_{\mathrm{SRS}}^{\mathrm{cs}} \geq n_{\mathrm{SRS}}^{\mathrm{cs,max}}/2 \\ \bar{k}_{\mathrm{TC}} & \text{otherwise} \end{cases}$$

... Equation 12.

Table 6.4.1.4.3-2: The offset for SRS as a function of TC and ' [TS 38.211].

| $K_{\mathrm{TC}}$ | $N_{\mathrm{symb}}^{SRS} = 1$ | $N_{\mathrm{symb}}^{SRS} = 2$ | $N_{\mathrm{symb}}^{SRS} = 4$ | $k_{offset}^0, \ldots, k_{offset}^{N_{symb}^{SRS}-1}$ $N_{\mathrm{symb}}^{SRS} = 8$ | $N_{\mathrm{symb}}^{SRS} = 12$ |
|---|---|---|---|---|---|
| 2 | 0 | 0,1 | 0,1,0,1 | - | - |
| 4 | - | 0,2 | 0,2,1,3 | 0, 2, 1, 3, 0, 2, 1, 3 | 0, 2, 1, 3, 0, 2, 1, 3, 0, 2, 1, 3 |
| 8 | - | - | 0, 4, 2, 6 | 0, 4, 2, 6, 1, 5, 3, 7 | 0, 4, 2, 6, 1, 5, 3, 7, 0, 4, 2, 6 |

Accordingly, when $n_{\mathrm{SRS}}^{\mathrm{cs}}$ is configured by *transmission Comb* to be greater than or equal to a maximum number of cyclic shifts $\frac{n_{\mathrm{SRS}}^{\mathrm{cs,max}}}{2}$ for $n_{\mathrm{SRS}}^{\mathrm{cs,max}} = 8, 12$, the SRS sequences of port $p_1$ and $p_3$ are allocated in a frequency domain with half a comb offset (e.g., $K_{\mathrm{TC}}/2$) gap with respect to the SRS sequences of port $p_0$ and $p_2$ even though different cyclic shifts have been already employed for sequences of each antenna port. This may provide an additional opportunity of orthogonality among SRS ports via different comb offsets (e.g., FDM), especially when the traffic load is low, in order to improve mean square error (MSE) performance for SRS estimation. Additionally, when $n_{\mathrm{SRS}}^{\mathrm{cs,max}} = 6$, the SRS sequences of port $p_1$ and $p_3$ may be allocated in a frequency domain with half a comb offset (e.g., $K_{\mathrm{TC}}/2$) gap with respect to the SRS sequences of port $p_0$ and $p_2$. This design can be adopted to support a 4-port SRS resource with a configured $n_{\mathrm{SRS}}^{\mathrm{cs,max}} = 6$, as 6 is not a multiple of 4. Thus, with minimal changes on a cyclic shift allocation equation, such a design provides high flexibility for a gNB to locate two different pairs of antenna ports in two different comb offsets.

In addition, the length of an SRS sequence allocation in a frequency domain (e.g., an SRS sequence length) $M_{\mathrm{sc},b}^{\mathrm{SRS}}$ may be given by Equation 13, below:

$$M_{\mathrm{sc},b}^{\mathrm{SRS}} = m_{\mathrm{SRS},b} N_{\mathrm{sc}}^{\mathrm{RB}}/(K_{\mathrm{TC}} P_{\mathrm{F}})$$

... Equation 13

where $m_{\mathrm{SRS},b}$ is given by a selected row of Table 6.4.1.4.3-1 in TS 38.211, shown below, with b = $B_{\mathrm{SRS}} \in \{0,1,2,3\}$ given by the field *b-SRS* in the higher-layer *parameter freqHopping* if configured, otherwise $B_{\mathrm{SRS}} = 0$. The row of the table may be selected according to the index $C_{SRS} \in \{0,1, \ldots ,63\}$, given by the field *c-SRS in freqHopping*. The quantity $P_{\mathrm{F}} \in \{2,4\}$ may be given by the higher-layer parameter *FreqScalingFactor*, if configured, otherwise $P_{\mathrm{F}} = 1$. When *FreqScalingFactor* is configured, the UE may expect the length of the SRS sequence to be a multiple of 6.

Table 6.4.1.4.3-1: SRS bandwidth configuration [TS 38.211].

| $C_{\mathrm{SRS}}$ | $B_{\mathrm{SRS}} = 0$ | | $B_{\mathrm{SRS}} = 1$ | | $B_{\mathrm{SRS}} = 2$ | | $B_{\mathrm{SRS}} = 3$ | |
|---|---|---|---|---|---|---|---|---|
| | $m_{\mathrm{SRS},0}$ | $N_0$ | $m_{\mathrm{SRS},1}$ | $N_1$ | $m_{\mathrm{SRS},2}$ | $N_2$ | $m_{\mathrm{SRS},3}$ | $N_3$ |
| 0 | 4 | 1 | 4 | 1 | 4 | 1 | 4 | 1 |
| 1 | 8 | 1 | 4 | 2 | 4 | 1 | 4 | 1 |
| 2 | 12 | 1 | 4 | 3 | 4 | 1 | 4 | 1 |
| 3 | 16 | 1 | 4 | 4 | 4 | 1 | 4 | 1 |

(continued)

| $C_{SRS}$ | $B_{SRS}=0$ | | $B_{SRS}=1$ | | $B_{SRS}=2$ | | $B_{SRS}=3$ | |
|---|---|---|---|---|---|---|---|---|
| | $m_{SRS,0}$ | $N_0$ | $m_{SRS,1}$ | $N_1$ | $m_{SRS,2}$ | $N_2$ | $m_{SRS,3}$ | $N_3$ |
| 4 | 16 | 1 | 8 | 2 | 4 | 2 | 4 | 1 |
| 5 | 20 | 1 | 4 | 5 | 4 | 1 | 4 | 1 |
| 6 | 24 | 1 | 4 | 6 | 4 | 1 | 4 | 1 |
| 7 | 24 | 1 | 12 | 2 | 4 | 3 | 4 | 1 |
| 8 | 28 | 1 | 4 | 7 | 4 | 1 | 4 | 1 |
| 9 | 32 | 1 | 16 | 2 | 8 | 2 | 4 | 2 |
| 10 | 36 | 1 | 12 | 3 | 4 | 3 | 4 | 1 |
| 11 | 40 | 1 | 20 | 2 | 4 | 5 | 4 | 1 |
| 12 | 48 | 1 | 16 | 3 | 8 | 2 | 4 | 2 |
| 13 | 48 | 1 | 24 | 2 | 12 | 2 | 4 | 3 |
| 14 | 52 | 1 | 4 | 13 | 4 | 1 | 4 | 1 |
| 15 | 56 | 1 | 28 | 2 | 4 | 7 | 4 | 1 |
| 16 | 60 | 1 | 20 | 3 | 4 | 5 | 4 | 1 |
| 17 | 64 | 1 | 32 | 2 | 16 | 2 | 4 | 4 |
| 18 | 72 | 1 | 24 | 3 | 12 | 2 | 4 | 3 |
| 19 | 72 | 1 | 36 | 2 | 12 | 3 | 4 | 3 |
| 20 | 76 | 1 | 4 | 19 | 4 | 1 | 4 | 1 |
| 21 | 80 | 1 | 40 | 2 | 20 | 2 | 4 | 5 |
| 22 | 88 | 1 | 44 | 2 | 4 | 11 | 4 | 1 |
| 23 | 96 | 1 | 32 | 3 | 16 | 2 | 4 | 4 |
| 24 | 96 | 1 | 48 | 2 | 24 | 2 | 4 | 6 |
| 25 | 104 | 1 | 52 | 2 | 4 | 13 | 4 | 1 |
| 26 | 112 | 1 | 56 | 2 | 28 | 2 | 4 | 7 |
| 27 | 120 | 1 | 60 | 2 | 20 | 3 | 4 | 5 |
| 28 | 120 | 1 | 40 | 3 | 8 | 5 | 4 | 2 |
| 29 | 120 | 1 | 24 | 5 | 12 | 2 | 4 | 3 |
| 30 | 128 | 1 | 64 | 2 | 32 | 2 | 4 | 8 |
| 31 | 128 | 1 | 64 | 2 | 16 | 4 | 4 | 4 |
| 32 | 128 | 1 | 16 | 8 | 8 | 2 | 4 | 2 |
| 33 | 132 | 1 | 44 | 3 | 4 | 11 | 4 | 1 |
| 34 | 136 | 1 | 68 | 2 | 4 | 17 | 4 | 1 |
| 35 | 144 | 1 | 72 | 2 | 36 | 2 | 4 | 9 |
| 36 | 144 | 1 | 48 | 3 | 24 | 2 | 12 | 2 |
| 37 | 144 | 1 | 48 | 3 | 16 | 3 | 4 | 4 |
| 38 | 144 | 1 | 16 | 9 | 8 | 2 | 4 | 2 |
| 39 | 152 | 1 | 76 | 2 | 4 | 19 | 4 | 1 |
| 40 | 160 | 1 | 80 | 2 | 40 | 2 | 4 | 10 |
| 41 | 160 | 1 | 80 | 2 | 20 | 4 | 4 | 5 |
| 42 | 160 | 1 | 32 | 5 | 16 | 2 | 4 | 4 |

(continued)

| $C_{SRS}$ | $B_{SRS}=0$ | | $B_{SRS}=1$ | | $B_{SRS}=2$ | | $B_{SRS}=3$ | |
|---|---|---|---|---|---|---|---|---|
| | $m_{SRS,0}$ | $N_0$ | $m_{SRS,1}$ | $N_1$ | $m_{SRS,2}$ | $N_2$ | $m_{SRS,3}$ | $N_3$ |
| 43 | 168 | 1 | 84 | 2 | 28 | 3 | 4 | 7 |
| 44 | 176 | 1 | 88 | 2 | 44 | 2 | 4 | 11 |
| 45 | 184 | 1 | 92 | 2 | 4 | 23 | 4 | 1 |
| 46 | 192 | 1 | 96 | 2 | 48 | 2 | 4 | 12 |
| 47 | 192 | 1 | 96 | 2 | 24 | 4 | 4 | 6 |
| 48 | 192 | 1 | 64 | 3 | 16 | 4 | 4 | 4 |
| 49 | 192 | 1 | 24 | 8 | 8 | 3 | 4 | 2 |
| 50 | 208 | 1 | 104 | 2 | 52 | 2 | 4 | 13 |
| 51 | 216 | 1 | 108 | 2 | 36 | 3 | 4 | 9 |
| 52 | 224 | 1 | 112 | 2 | 56 | 2 | 4 | 14 |
| 53 | 240 | 1 | 120 | 2 | 60 | 2 | 4 | 15 |
| 54 | 240 | 1 | 80 | 3 | 20 | 4 | 4 | 5 |
| 55 | 240 | 1 | 48 | 5 | 16 | 3 | 8 | 2 |
| 56 | 240 | 1 | 24 | 10 | 12 | 2 | 4 | 3 |
| 57 | 256 | 1 | 128 | 2 | 64 | 2 | 4 | 16 |
| 58 | 256 | 1 | 128 | 2 | 32 | 4 | 4 | 8 |
| 59 | 256 | 1 | 16 | 16 | 8 | 2 | 4 | 2 |
| 60 | 264 | 1 | 132 | 2 | 44 | 3 | 4 | 11 |
| 61 | 272 | 1 | 136 | 2 | 68 | 2 | 4 | 17 |
| 62 | 272 | 1 | 68 | 4 | 4 | 17 | 4 | 1 |

With the emergence of 3 Tx antenna port devices, determining the frequency domain start position of each antenna port $p_i$ may require derivation of the comb offset $k_{TC}^{(p_i)}$ for each antenna port $p_i$ (where $i=0,1,2$). Whether using a 4 port SRS resource or a 3 port SRS resource, the comb offset can be defined in accordance with Equation 14, below:

$$k_{TC}^{(p_i)} = \begin{cases} \left(\bar{k}_{TC} + K_{TC}/2\right) \bmod K_{TC} & p_i \in \{1001\}, \text{ and } n_{SRS}^{cs,max} = 6 \\ \left(\bar{k}_{TC} + K_{TC}/2\right) \bmod K_{TC} & p_i \in \{1001\}, \ n_{SRS}^{cs,max} \in \{8, 12\} \text{ and } n_{SRS}^{cs} \geq n_{SRS}^{cs,max}/2 \\ \bar{k}_{TC} & otherwise \end{cases}$$

$$\ldots \text{Equation 14}$$

where orthogonality among the SRS ports can be achieved either through different cyclic shifts, different comb offsets, or both. The gNB can flexibly configure this for $n_{SRS}^{cs,max} \in \{8, 12\}$, while for $n_{SRS}^{cs,max} = 6$, orthogonality is achievable through both different cyclic shifts and comb offsets.

According to another embodiment, the comb offset $k_{TC}^{(p_i)}$ can also be defined by Equation 15, below:

$$k_{TC}^{(p_i)} = \begin{cases} \left(\bar{k}_{TC} + K_{TC}/2\right) \bmod K_{TC} & p_i \in \{1001\} \text{ and } n_{SRS}^{cs} \geq n_{SRS}^{cs,max}/2 \\ \bar{k}_{TC} & otherwise \end{cases}$$

$$\ldots \text{Equation 15}$$

where orthogonality among the SRS ports can again be achieved either through different cyclic shifts, different comb offsets, or both, with flexible gNB configuration for all $n_{\text{SRS}}^{\text{cs,max}} \in \in \{6, 8, 12\}$.

According to another embodiment, the comb offset $k_{\text{TC}}^{(p_i)}$ can be defined by Equation 16:

$$k_{\text{TC}}^{(p_i)} = \begin{cases} (\bar{k}_{\text{TC}} + K_{\text{TC}}/2) \bmod K_{\text{TC}} & p_i \in \{1001\} \\ \bar{k}_{\text{TC}} & p_i \in \{1000, 1002\} \end{cases}$$

$$\dots \text{Equation 16}$$

where orthogonality among the SRS ports is always achieved through different cyclic shifts and different comb offsets for all $n_{\text{SRS}}^{\text{cs,max}} \in \{6, 8, 12\}$; or the comb offset could be set as $k_{\text{TC}}^{(p_i)} = \bar{k}_{\text{TC}}$, where one comb offset is applied to all three ports and orthogonality among SRS ports is achieved through different cyclic shifts for all $n_{\text{SRS}}^{\text{cs,max}} \in \{6, 8, 12\}$. For each of the above-described embodiments, a different corresponding approach may be employed for allocation of cyclic shifts to a set of 3 Tx antenna ports.

Power control will now be described.

The SRS power control parameters may be semi-statically configured at the resource set level by the RRC. These power control parameters may include nominal UE Tx power $P_{0\_SRS,b,f,c}(q_s)$, fractional power control multiplier $\alpha_{SRS,b,f,c}(q_s)$, and pathloss reference signal $q_d$, which are used for the SRS power control calculation shown below in Equation 17:

$$P_{SRS,b,f,c}(i,q_s,l) = \min \begin{cases} P_{CMAX,f,c}(i) \\ P_{0\_SRS,b,f,c}(q_s) + 10\log\left(2^{\mu} M_{SRS,b,f,c}(i)\right) + \alpha_{SRS,b,f,c}(q_s)PL_{b,f,c}(q_d) + h_{b,f,c}(i,l) \end{cases}$$

$$\dots \text{Equation 17}$$

where $b,f,c,i$ and $q_s$ respectively present the active bandwidth part, carrier, serving cell, transmission occasion and parameter set. $P_{CMAX,f,c}(i)$ refers to the configured UE transmit power, $M_{SRS,b,f,c}(i)$ is the number of SRS resource blocks, $\mu$ is the subcarrier spacing, and $h_{b,f,c}(i,l)$ is the closed loop power control component for state $l$. The power is allocated to the antenna ports such that the UE splits the power equally across the antenna ports on that are transmitting the PUSCH with a non-zero power. This may be done using the amplitude scaling coefficient $\frac{1}{\sqrt{N_{ap}^{SRS}}}\beta_{\text{SRS}}$, which is applied to the SRS sequence for each port, as shown below in Equation 18:

$$a_{K_{\text{TC}}k'+k_0^{(p_i)},l'+l_0}^{(p_i)} = \begin{cases} \frac{1}{\sqrt{N_{\text{ap}}}}\beta_{\text{SRS}} r^{(p_i)}(k',l') & \text{if } k' = 0,1,\dots,M_{\text{sc},b}^{\text{SRS}} - 1 \text{ and } l' = 0,1,\dots,N_{\text{symb}}^{\text{SRS}} - 1 \\ 0 & \text{otherwise} \end{cases}$$

$$\dots \text{Equation 18}$$

where $N_{ap}^{SRS}$ is the number of SRS ports given by higher-layer parameter *nrofSRS-Ports*, and $\beta_{\text{SRS}}$ is the SRS transmit power $P_{SRS,b,f,c}(i, q_s,l)$, as explained above. The sequence $r^{(p_i)}(k', , l')$ is the SRS sequence of the antenna port $p_i$ on orthogonal frequency division multiplexing (OFDM) symbol $l'$.

With the emergence of 3 Tx antenna port devices, the amplitude scaling factor of the SRS sequence for each antenna port $p_i$ may become $\frac{1}{\sqrt{\widehat{N}_{ap}^{SRS}}}\beta_{\text{SRS}}$, where $\widehat{N}_{ap}^{SRS}$ is the number of SRS ports that are used for transmission among the ones given by the higher-layer parameter *nrofSRS-Ports* (e.g., $\widehat{N}_{ap}^{SRS} = 3$ for 3 Tx transmission). For instance, with a 4 port SRS resource, the allocated power of one specific port should be zero while a UE splits the transmit power equally across the other three antenna ports on which the UE transmits the SRS with a non-zero power. Thus, for a 4 port SRS resource, the amplitude scaling factor of an SRS sequence for the three SRS ports with a non-zero power in the 3 Tx transmission may become $\frac{2}{\sqrt{3}}$ of that in a 4 Tx transmission. Accordingly, the SRS sequence for each port $p_i$ may be provided based on Equation 19, below:

$$
a^{(p_i)}_{K_{\mathrm{TC}} k' + k_0^{(p_i)}, l' + l_0} = \begin{cases} \dfrac{1}{\sqrt{\widehat{N}^{SRS}_{ap}}} \beta_{\mathrm{SRS}} r^{(p_i)}(k', l') & \text{if } k' = 0, 1, \dots, M^{SRS}_{sc,b} - 1 \text{ and } l' = 0,1, \dots, N^{SRS}_{\mathrm{symb}} - 1 \\ 0 & \text{otherwise} \end{cases}
$$

$$\dots \text{Equation 19.}$$

An antenna switching SRS configuration will now be described.

According to an embodiment, when the UE is configured with *antennaSwitching* in the *SRS-ResourceSet,* some systems may only support configurations for *supportedSRS-TxPortSwitch* where transmit and receive configurations exist with $x = \{1, 2, 4, 8\}$. However, with the emergence of 3 Tx antenna port devices, antenna switching configurations for the number of SRS resource sets and resources can be introduced to additionally support scenarios where x, y = {3,6} (where "x" is the number of transmitting antennas, and "y" is the number of receiving antennas) for a new UE capability *supportedSRS-TxPortSwitch* for 1 transmitting antenna on the UE, 3 receiving antennas on the gNB (1T3R); 3 transmitting antenna on the UE, 3 receiving antennas on the gNB (3T3R); 3 transmitting antenna on the UE, 4 receiving antennas on the gNB (3T4R); 3 transmitting antenna on the UE, 6 receiving antennas on the gNB (3T6R); 6 transmitting antenna on the UE, 6 receiving antennas on the gNB (6T6R); and 3 transmitting antenna on the UE, 8 receiving antennas on the gNB (3T8R). Although the transmitting antennas are said to be "on the UE", and the receiving antennas are said to be "on the gNB", other configurations may be supported where the receiving antennas are on the UE, and the transmitting antennas are on the gNB.

A 1T3R scenario will now be described.

In the 1T3R configuration, if the UE is indicating *srs-AntennaSwitching2SP-1Periodic* and/or *srs-ExtensionAperiodicSRS,* different resource sets can be configured depending on the specific indication.

According to an embodiment, for the 1T3R configuration, when the UE is indicating *srs-AntennaSwitching2SP-1Periodic* only, up to two SRS resource sets with the *resourceType* in the *SRS-ResourceSet* set to 'semi-persistent' and up to one SRS resource set with the *resourceType* set to 'periodic' can be configured. Additionally or alternatively, up to two SRS resource sets configured with a different value for the higher-layer parameter *resource Type* in *SRS-ResourceSet* can be configured, with the restriction that the two SRS resource sets configured as *'semi-persistent'* cannot be activated simultaneously. Each SRS resource set may include three SRS resources transmitted in different symbols, and each SRS resource in a given set may include a single SRS port. The SRS port of each resource may be associated with a different UE antenna port.

When the UE is indicating *srs-ExtensionAperiodicSRS* only, up to three SRS resource sets with the *resourceType* set to 'aperiodic' and up to one SRS resource set with the *resourceType* set to 'periodic' or 'semi-persistent' can be configured. Additionally or alternatively, up to two SRS resource sets can be configured with a different value for the *resourceType* in the *SRS-ResourceSet.* In the case of three resource sets, three SRS resources may be transmitted in different symbols in three separate slots, and the SRS port of each SRS resource may be associated with a different UE antenna port, with each set configured with one SRS resource. For two resource sets with *resourceType* set to 'aperiodic', three SRS resources may be transmitted in different symbols of two different slots. The SRS port of each SRS resource may be associated with a different UE antenna port pair, with one set configured with two SRS resources and the other with one. When only one resource set with *resourceType* set to 'aperiodic' is configured, three SRS resources may be transmitted in different symbols of one slot, with the SRS port of each resource associated with a different UE antenna port. This set may be configured with three SRS resources. Each SRS resource set with the *resourceType* set to 'periodic' or 'semi-persistent' may have three SRS resources transmitted in different symbols, with each resource including a single SRS port, and the SRS port of each resource associated with a different UE antenna port.

If the UE is not indicating *srs AntennaSwitching2SP-IPeriodic,* then zero, one, or two SRS resource sets configured with different values for *resourceType* in the *SRS-ResourceSet* set to 'periodic' or 'semi-persistent' can be used. If the UE is indicating *srs-AntennaSwitching2SP-1Periodic,* up to two SRS resource sets configured with a *resourceType* set to 'semi-persistent', and one SRS resource set configured with a *resourceType* set to 'periodic' can be configured, with the constraint that the two *semi-persistent* SRS resource sets may not be activated simultaneously. An SRS resource set may include three SRS resources transmitted in different symbols, and each resource may include a single SRS port, with the SRS port of each resource associated with a different UE antenna port.

If the UE is not indicating *srs-ExtensionAperiodicSRS,* then zero or one SRS resource sets with a *resourceType* set to *'aperiodic'* can be configured. If the UE is indicating *srs-ExtensionAperiodicSRS,* then up to three SRS resource sets configured with a *resource Type* set to *'aperiodic'* can be used. If one resource set is configured, three SRS resources may be transmitted in different symbols of one slot, with the SRS port of each resource associated with a different UE antenna port. For two resource sets, three SRS resources may be transmitted in different symbols of two slots, with the SRS port of each resource associated with a different UE antenna port. One set may be configured with two SRS resources, and the other with one resource. If three resource sets are configured, three SRS resources may be transmitted in different symbols of three separate slots, and the SRS port of each resource may be associated with a different UE antenna port, with each set configured with one SRS resource.

Additionally or alternatively, for the 1T3R configuration, up to two SRS resource sets can be configured with different values for the higher-layer parameter *resource Type* in *SRS-ResourceSet.* Each set may include three SRS resources transmitted in different symbols, and each SRS resource may include a single SRS port, with the SRS port of each resource associated with a different UE antenna port.

A 3T3R scenario will now be described.

According to an embodiment, for the 3T3R configuration using a 3-port SRS configuration, up to two SRS resource sets can be configured, with each resource set including one SRS resource. The number of SRS ports for each resource may be three, provided the UE is not indicating *srs-AntennaSwitching2SP-lPeriodic.* If the UE is indicating *srs-AntennaSwitching2SP-1Periodic,* up to two SRS resource sets can still be configured, but the two SRS resource sets configured with *resourceType* set to *'semi-persistent'* cannot be activated simultaneously. Additionally, one SRS resource set can be configured with *resourceType* set to *'periodic'.* In both cases, each SRS resource set has one SRS resource, with three SRS ports allocated per resource.

For the 3T3R configuration using a 4-port SRS configuration, up to three SRS resource sets can be configured, each including one SRS resource. The number of SRS ports for each resource may be four, provided the UE is not indicating *srs-AntennaSwitching2SP-lPeriodic.* When *srs-AntennaSwitching2SP-lPeriodic* is indicated, up to two SRS resource sets can be configured, following the same restrictions where two *semi-persistent* SRS resource sets cannot be activated simultaneously, and one additional SRS resource set can be configured with *resourceType* set to *'periodic'.* In these configurations, each SRS resource may include four SRS ports; however, the UE may only be required to operate three switching events across three ports of each configured SRS resource. This means that the antenna switching for one specific port may be dropped by the UE.

The selection of the port to be dropped can be determined by a pre-defined rule (e.g., always selecting the fourth port), by configurations from the gNB, or by a decision made by the UE. This selection criterion may be influenced by factors such as performance, the UE's PA architecture, the UE's coherency capability, or the spatial channel. Generally, a tradeoff between performance and indication overhead may guide the selection process. If the port selection is determined by the gNB, the decision can be communicated to the UE semi-statically through an RRC configuration or dynamically through a MAC CE and/or DCI. This may require a new RRC parameter or modifications to existing DCI/MAC CE fields, either through a codepoint or bitmap method, with the codepoint method offering lower overhead. Additionally or alternatively, the UE may make the selection itself and inform the gNB via UE capability signaling.

Accordingly, a port re-indexing procedure may be assumed at the UE, where the selected port (e.g., the fourth port) is re-indexed as port 3. The remaining ports may be re-indexed in order of their original numbers to ports 0, 1, and 2. After re-indexing, the UE may consistently drop the antenna switching procedure for the fourth port of each SRS resource.

A 3T4R scenario using a 3 port SRS configuration will now be described.

For this configuration, when the UE is indicating *srs-AntennaSwitching2SP-1Periodic* and/or *srs-ExtensionAperiodicSRS,* different resource set configurations can be applied.

According to an embodiment, if the UE is indicating *srs-AntennaSwitching2SP-1Periodic* only, up to two SRS resource sets with the *resource Type* set to *'semi-persistent'* and up to one SRS resource set with the *resourceType* set to *'periodic'* can be configured. Additionally or alternatively, up to two SRS resource sets configured with a different value for the higher-layer parameter *resourceType* in the *SRS-ResourceSet* can be configured. However, the two SRS resource sets with the *resourceType* set to *'semi-persistent'* cannot be activated simultaneously. Each SRS resource set may include four SRS resources transmitted in different symbols, with each SRS resource in a given set including three SRS ports. The three SRS ports of each resource may be associated with at least one specific different UE antenna port (e.g., based on a pre-defined rule or configured and/or indicated), rather than the three SRS ports of another resource.

When the UE is indicating *srs-ExtensionAperiodicSRS* only, up to two SRS resource sets with the *resourceType* set to *'aperiodic'* and up to one SRS resource set with the *resourceType* set to *'periodic'* or *'semi-persistent'* can be configured. Additionally or alternatively, up to two SRS resource sets configured with a different value for the higher-layer parameter *resourceType* in the *SRS-ResourceSet* can be used. If two resource sets with the *resourceType* set to *'aperiodic'* are configured, a total of four SRS resources may be transmitted in different symbols of two separate slots. The three SRS ports of each SRS resource in the two sets may be associated with at least one specific different UE antenna port (e.g., based on a pre-defined rule or configured and/or indicated). In this case, each of the two sets may be configured with two SRS resources. If only one resource set with the *resourceType* set to *'aperiodic'* is configured, four SRS resources may be transmitted in different symbols in the same slot. Each SRS resource may include three SRS ports, and the three SRS ports of each resource may be associated with at least one specific different UE antenna port than the three SRS ports of another resource.

For SRS resource sets with the *resource Type* set to 'periodic' or 'semi-persistent', four SRS resources may be transmitted in different symbols. Each SRS resource may include three SRS ports, and the three SRS ports of each resource may be associated with at least one specific different UE antenna port than the three SRS ports of another resource.

If the UE is not indicating *srs AntennaSwitching2SP-IPeriodic*, zero, one, or two SRS resource sets can be configured with different values for the higher-layer parameter *resource Type* in the *SRS-ResourceSet* set to 'periodic' or 'semi-persistent'. If the UE is indicating *srs-AntennaSwitching2SP-1Periodic*, up to two SRS resource sets with the *resource Type* set to 'semi-persistent' and up to one SRS resource set with the *resource Type* set to 'periodic' can be configured, provided that the two *semi-persistent* SRS resource sets are not activated simultaneously. Each SRS resource set may include four SRS resources transmitted in different symbols, with each resource including three SRS ports. The three SRS ports of each resource may be associated with at least one specific different UE antenna port than the three SRS ports of another resource.

Additionally or alternatively, if the UE is not indicating *srs-ExtensionAperiodicSRS*, zero or one SRS resource sets with the *resourceType* set to 'aperiodic' can be configured. If the UE is indicating *srs-ExtensionAperiodicSRS*, up to two SRS resource sets with the *resourceType* set to 'aperiodic' can be configured. If one *aperiodic* resource set is configured, four SRS resources may be transmitted in different symbols in the same slot, and each SRS resource may include three SRS ports associated with at least one specific different UE antenna port than the three SRS ports of another resource. If two resource sets are configured, four SRS resources may be transmitted in different symbols of two different slots, and the three SRS ports of each SRS resource may be associated with at least one specific different UE antenna port. In this case, each of the two sets may be configured with two SRS resources.

Otherwise, up to two SRS resource sets can be configured with a different value for the higher-layer parameter *resourceType* in the *SRS-ResourceSet*, where each SRS resource set includes four SRS resources transmitted in different symbols. Each SRS resource in a given set may include three SRS ports, and the three SRS ports of each resource may be associated with at least one specific different UE antenna port than the three SRS ports of another resource.

The solution described above may provide a maximum possible number of opportunities for the UE to freely select, combine, and switch three transmit ports out of its four available ports for a 3 Tx transmission. However, a more general alternatively approach is possible.

According to an embodiment, when the UE is indicating *srs-AntennaSwitching2SP-1Periodic* only, up to two SRS resource sets with the *resource Type* set to 'semi-persistent' and up to one SRS resource set with the *resourceType* set to 'periodic' can be configured. Additionally or alternatively, up to two SRS resource sets with a different value for the higher-layer parameter *resourceType* in the *SRS-ResourceSet* can be configured. The two SRS resource sets with the *resourceType* set to 'semi-persistent' may not be activated simultaneously. Each SRS resource set may include between 2 and 4 SRS resources ($2 \leq M \leq 4$) transmitted in different symbols, with each SRS resource including three SRS ports. The three SRS ports of each resource may be associated with at least one specific different UE antenna port (e.g., based on a pre-defined rule or configured and/or indicated) than the three SRS ports of another resource.

When the UE is indicating *srs-ExtensionAperiodicSRS* only, up to two SRS resource sets with the *resourceType* set to 'aperiodic' and up to one SRS resource set with the *resourceType* set to 'periodic' or 'semi-persistent' may be configured. Additionally or alternatively, up to two SRS resource sets with a different value for the higher-layer parameter *resourceType* in the *SRS-ResourceSet* may be used. If two resource sets with the *resourceType* set to 'aperiodic' are configured, between 2 and 4 SRS resources ($2 \leq M \leq 4$) may be transmitted in different symbols across two separate slots. The three SRS ports of each resource in the two sets may be associated with at least one specific different UE antenna port (e.g., based on a pre-defined rule or configured and/or indicated). In this case, each of the two sets may be configured with two SRS resources. If only one resource set with the *resourceType* set to 'aperiodic' is configured, between 2 and 4 SRS resources ($2 \leq M \leq 4$) should be transmitted in different symbols within the same slot. Each SRS resource should include three SRS ports, and the three SRS ports of each resource may be associated with at least one specific different UE antenna port than the three SRS ports of another resource.

Each SRS resource set with the *resourceType* set to 'periodic' or 'semi-persistent' may include between 2 and 4 SRS resources ($2 \leq M \leq 4$) transmitted in different symbols. Each SRS resource in a given set may include three SRS ports, and the three SRS ports of each resource may be associated with at least one specific different UE antenna port than the three SRS ports of another resource.

If the UE is not indicating *srs AntennaSwitching2SP-IPeriodic*, zero, one, or two SRS resource sets may be configured with a different value for the higher-layer parameter *resourceType* in the *SRS-ResourceSet* set to 'periodic' or 'semi-persistent'. If *srs-AntennaSwitching2SP-IPeriodic* is indicated, up to two SRS resource sets with the *resourceType* set to 'semi-persistent' and up to one SRS resource set with the *resourceType* set to 'periodic' may be configured, provided that the two *semi-persistent* SRS resource sets are not activated simultaneously. Each SRS resource set should include between 2 and 4 SRS resources ($2 \leq M \leq 4$) transmitted in different symbols. Each SRS resource in a given set should include three SRS ports, and the three SRS ports of each resource may be associated with at least one specific different UE antenna port than the three SRS ports of another resource.

Additionally or alternatively, if the UE is not indicating *srs-ExtensionAperiodicSRS,* zero or one SRS resource sets with the *resourceType* set to *'aperiodic'* may be configured. If the UE is indicating *srs-ExtensionAperiodicSRS,* up to two SRS resource sets with the *resourceType* set to 'aperiodic' may be configured. If one *'aperiodic'* resource set is configured, between 2 and 4 SRS resources ($2 \leq M \leq 4$) should be transmitted in different symbols in the same slot, and each SRS resource may include three SRS ports associated with at least one specific different UE antenna port than the three SRS ports of another resource. If two resource sets are configured, between 2 and 4 SRS resources ($2 \leq M \leq 4$) may be transmitted in different symbols across two different slots. The three SRS ports of each SRS resource in the two sets should be associated with at least one specific different UE antenna port. In this case, each of the two sets should be configured with two SRS resources.

Otherwise, up to two SRS resource sets may be configured with a different value for the higher-layer parameter *resourceType* in the *SRS-ResourceSet,* where each set includes between 2 and 4 SRS resources ($2 \leq M \leq 4$) transmitted in different symbols. Each SRS resource should include three SRS ports, and the three SRS ports of each resource may be associated with at least one specific different UE antenna port than the three SRS ports of another resource.

Accordingly, the specific different UE antenna port could be identified through a pre-defined rule (e.g., always the first, last, or mth port), through gNB configurations, or through a decision made by the UE. The selection criteria may also be related to performance, the UE's PA architecture, the UE's coherency capability, or the spatial channel conditions. Generally, there may be a tradeoff between performance and indication overhead that determines the selection criteria. If the port selection is decided by the gNB, it could be indicated to the UE semi-statically through an RRC configuration or dynamically through a MAC CE and/or DCI. This indication may require a new RRC parameter or modified DCI/MAC CE fields, either through a codepoint or bitmap method, with the codepoint method resulting in less overhead. Additionally or alternatively, the UE could select the port and inform the gNB via UE capability signaling.

A 3T4R scenario using a 4 port SRS configuration will now be described.

For this configuration, when the UE is indicating *srs-AntennaSwitching2SP-1Periodic* and/or *srs-ExtensionAperiodicSRS,* different resource set configurations can be applied.

According to an embodiment, if the UE is indicating *srs-AntennaSwitching2SP-1Periodic* only, then up to two SRS resource sets with the *resource Type* set to 'semi-persistent' and up to one SRS resource set with the *resourceType* set to 'periodic' may be configured. Additionally or alternatively, up to two SRS resource sets configured with a different value for the higher-layer parameter *resourceType* in the *SRS-ResourceSet* may be configured. The two SRS resource sets with the *resourceType* set to 'semi-persistent' should not be activated at the same time. Each SRS resource set may include four SRS resources transmitted in different symbols, with each SRS resource in a given set including four SRS ports. The SRS ports of each resource should be associated with at least one specific different UE antenna port (e.g., based on a pre-defined rule or configured and/or indicated) with a non-zero power, compared to the SRS ports of another resource.

If the UE is indicating *srs-ExtensionAperiodicSRS* only, then up to two SRS resource sets with the *resourceType* set to 'aperiodic' and up to one SRS resource set with the *resourceType* set to 'periodic' or 'semi-persistent' may be configured. Additionally or alternatively, up to two SRS resource sets with a different value for the higher-layer parameter *resource Type* in the *SRS-ResourceSet* may be configured. In the case of two resource sets with the *resourceType* set to 'aperiodici', a total of four SRS resources may be transmitted in different symbols across two different slots. The SRS ports of each resource in the two sets should be associated with at least one specific different UE antenna port (e.g., based on a pre-defined rule or configured and/or indicated) with a non-zero power. Each set may be configured with two SRS resources. In the case where one resource set with the *resourceType* set to 'aperiodic' is configured, four SRS resources should be transmitted in different symbols within the same slot. Each SRS resource may include four SRS ports, and the SRS ports of each resource should be associated with at least one specific different UE antenna port (e.g., based on a pre-defined rule or configured and/or indicated) with a non-zero power compared to the SRS ports of another resource. Each SRS resource set with the *resourceType* set to 'periodic' or 'semi-persistent' may include four SRS resources transmitted in different symbols, with each SRS resource in a given set including four SRS ports. The SRS ports of each resource should be associated with at least one specific different UE antenna port (e.g., based on a pre-defined rule or configured and/or indicated) with a non-zero power compared to the SRS ports of another resource.

If the UE is not indicating *srs AntennaSwitching2SP-IPeriodic,* zero, one, or two SRS resource sets with a different value for the higher-layer parameter *resource Type* in the *SRS-ResourceSet* set to 'periodic' or 'semi-persistent' may be configured. If the UE is indicating *srs-AntennaSwitching2SP-1Periodic,* up to two SRS resource sets with the *resourceType* set to 'semi-persistent' and up to one SRS resource set with the *resourceType* set to 'periodic' may be configured, provided that the two SRS resource sets with the *resourceType* set to 'semi-persistent' are not activated at the same time. Each SRS resource set should include four SRS resources transmitted in different symbols. Each SRS resource in a given set should include four SRS ports, and the SRS ports of each resource should be associated with at least one specific different UE antenna port (e.g., based on a pre-defined rule or configured and/or indicated) with a non-zero power compared to the SRS ports of another resource.

Additionally or alternatively, zero or one SRS resource sets with the *resourceType* set to '*aperiodic*' may be configured if the UE is not indicating *srs-ExtensionAperiodicSRS*. If the UE is indicating *srs-ExtensionAperiodicSRS,* up to two SRS resource sets with the *resourceType* set to '*aperiodic*' may be configured. In the case where one '*aperiodic*' resource set is configured, a total of four SRS resources should be transmitted in different symbols within the same slot. Each SRS resource may include four SRS ports, and the SRS ports of each resource should be associated with at least one specific different UE antenna port (e.g., based on a pre-defined rule or configured and/or indicated) with a non-zero power compared to the SRS ports of another resource. If two resource sets are configured, a total of four SRS resources may be transmitted in different symbols across two different slots. The SRS ports of each resource in the two sets should be associated with at least one specific different UE antenna port (e.g., based on a pre-defined rule or configured and/or indicated) with a non-zero power. Each set may be configured with two SRS resources.

Otherwise, up to two SRS resource sets may be configured with a different value for the higher-layer parameter *resourceType* in the *SRS-ResourceSet,* where each set includes four SRS resources transmitted in different symbols. Each SRS resource may include four SRS ports, and the SRS ports of each resource should be associated with at least one specific different UE antenna port (e.g., based on a pre-defined rule or configured and/or indicated) with a non-zero power compared to the SRS ports of another resource.

The solution described above may provide a maximum number of possible opportunities for the UE to freely select, combine, and switch three transmit ports out of its four ports for a 3 Tx transmission. However, a more general alternatively approach is possible.

According to an embodiment, when the UE is indicating *srs-AntennaSwitching2SP-1Periodic* only, up to two SRS resource sets with the *resource Type* set to '*semi-persistent*' and up to one SRS resource set with the *resourceType* set to '*periodic*' may be configured. Additionally or alternatively, up to two SRS resource sets configured with a different value for the higher-layer parameter *resourceType* in the *SRS-ResourceSet* may be configured. The two SRS resource sets configured with the *resourceType* set to '*semi-persistent*' should not be activated at the same time. Each SRS resource set may include between 2 and 4 SRS resources ($2 \leq M \leq 4$) transmitted in different symbols, with each SRS resource in a given set including four SRS ports. The four SRS ports of each resource should be associated with at least one specific different UE antenna port (e.g., based on a pre-defined rule or configured and/or indicated) with a non-zero power, compared to the four SRS ports of another resource.

When the UE is indicating *srs-ExtensionAperiodicSRS* only, up to two SRS resource sets with the *resourceType* set to '*aperiodic*' and up to one SRS resource set with the *resourceType* set to '*periodic*' or '*semi-persistent*' may be configured. Additionally or alternatively, up to two SRS resource sets configured with a different value for the higher-layer parameter *resource Type* in the *SRS-ResourceSet* may be configured. In the case of two resource sets with the *resourceType* set to '*aperiodici*', a total of between 2 and 4 SRS resources ($2 \leq M \leq 4$) may be transmitted in different symbols across two different slots. The four SRS ports of each resource in the two sets should be associated with at least one specific different UE antenna port (e.g., based on a pre-defined rule or configured and/or indicated) with a non-zero power. Each set may be configured with two SRS resources. In the case where one resource set with the *resourceType* set to '*aperiodic*' is configured, between 2 and 4 SRS resources ($2 \leq M \leq 4$) should be transmitted in different symbols within the same slot. Each SRS resource may include four SRS ports, and the four SRS ports of each resource should be associated with at least one specific different UE antenna port (e.g., based on a pre-defined rule or configured and/or indicated) with a non-zero power, compared to the four SRS ports of another resource. Each SRS resource set with the *resourceType* set to '*periodic*' or '*semi-persistent*' may include between 2 and 4 SRS resources ($2 \leq M \leq 4$) transmitted in different symbols, with each SRS resource in a given set including four SRS ports. The four SRS ports of each resource should be associated with at least one specific different UE antenna port (e.g., based on a pre-defined rule or configured and/or indicated) with a non-zero power, compared to the four SRS ports of another resource.

If the UE is not indicating *srs AntennaSwitching2SP-IPeriodic,* zero, one, or two SRS resource sets with a different value for the higher-layer parameter *resource Type* in the *SRS-ResourceSet* set to '*periodic*' or '*semi-persistent*' may be configured. If the UE is indicating *srs-AntennaSwitching2SP-1Periodic,* up to two SRS resource sets with the *resourceType* set to '*semi-persistent*' and up to one SRS resource set with the *resourceType* set to '*periodic*' may be configured, provided that the two SRS resource sets with the *resourceType* set to '*semi-persistent*' are not activated at the same time. Each SRS resource set should include between 2 and 4 SRS resources ($2 \leq M \leq 4$) transmitted in different symbols. Each SRS resource in a given set may include four SRS ports, and the four SRS ports of each resource should be associated with at least one specific different UE antenna port (e.g., based on a pre-defined rule or configured and/or indicated) with a non-zero power, compared to the four SRS ports of another resource.

Additionally or alternatively, zero or one SRS resource sets with the *resourceType* set to '*aperiodic*' may be configured if the UE is not indicating *srs-ExtensionAperiodicSRS*. If the UE is indicating *srs-ExtensionAperiodicSRS,* up to two SRS resource sets with the *resourceType* set to '*aperiodic*' may be configured. In the case where one *aperiodic*

resource set is configured, between 2 and 4 SRS resources ($2 \leq M \leq 4$) should be transmitted in different symbols within the same slot. Each SRS resource may include four SRS ports, and the four SRS ports of each resource should be associated with at least one specific different UE antenna port (e.g., based on a pre-defined rule or configured and/or indicated) with a non-zero power, compared to the four SRS ports of another resource. If two resource sets are configured, between 2 and 4 SRS resources ($2 \leq M \leq 4$) may be transmitted in different symbols across two different slots. The four SRS ports of each resource in the two sets should be associated with at least one different UE antenna port with a non-zero power. Each set may be configured with two SRS resources.

Otherwise, up to two SRS resource sets may be configured with a different value for the higher-layer parameter *resourceType* in the *SRS-ResourceSet,* where each set includes between 2 and 4 SRS resources ($2 \leq M \leq 4$) transmitted in different symbols. Each SRS resource may include four SRS ports, and the four SRS ports of each resource should be associated with at least one specific different UE antenna port (e.g., based on a pre-defined rule or configured and/or indicated) with a non-zero power, compared to the four SRS ports of another resource.

In these configurations, the number of SRS ports for each resource is four, while the UE would only need to operate across three ports for each configured SRS resource. That is, the antenna switching over one specific port identification (ID) may be dropped by the UE. The selection of that one specific port out of the four antenna ports of each SRS resource may be determined either through a pre-defined rule (e.g., always the fourth port), through gNB configurations, or through a decision made by the UE. Such selection criteria may be related to the performance, the UE's PA architecture, the UE's coherency capability, and/or spatial channel conditions. Hence, in general, there may be a beneficial tradeoff between performance and indication overhead that may form the selection criteria. When port selection is decided by the gNB, it could be indicated to the UE semi-statically through an RRC configuration, or dynamically through a MAC CE and/or DCI. Such an indication may require a new RRC parameter, or a new and/or re-used DCI/MAC CE field, either in a codepoint method or bitmap method, with the codepoint method resulting in less overhead.

Additionally or alternatively, the UE may determine the port, and inform the gNB where the determination could be communicated through using UE capability signaling. With no loss of generality, a port re-indexing procedure may be assumed at the UE, where the selected specific port is re-indexed as port 3 (e.g., the fourth port), while the other remaining ports are accordingly re-indexed in the order of their port numbers to ports 0, 1, and 2. Thus, after re-indexing, the UE may always drop the antenna switching procedure over the fourth port of each SRS resource.

Furthermore, the at least one specific different UE antenna port may be identified through a pre-defined rule (e.g., always the first, last, or mth port), through gNB configurations, or through a determination made by the UE. The selection criteria might also be related to performance, the UE's PA architecture, the UE's coherency capability, and/or the spatial channel condition. Hence, in general, there may be a beneficial tradeoff between performance and indication overhead that may form the selection criteria. When port selection is decided by the gNB, it could be indicated to the UE semi-statically through an RRC configuration, or dynamically through a MAC CE and/or DCI. Such an indication may require a new RRC parameter, or a new and/or re-used DCI/MAC CE field, either in a codepoint method or bitmap method, with the codepoint method resulting in less overhead. Additionally or alternatively, the UE might determine the port and inform the gNB through UE capability signaling.

A 3T6R scenario using a 3 port SRS configuration will now be described.

For this configuration, when the UE is indicating *srs-AntennaSwitching2SP-1Periodic* and/or *srs-ExtensionAperiodicSRS,* different resource set configurations can be applied.

When the UE is indicating *srs-AntennaSwitching2SP-lPeriodic* only, up to two SRS resource sets with the *resourceType* set to *'semi-persistent'* and up to one SRS resource set with the *resourceType* set to *'periodic'* may be configured. Additionally or alternatively, up to two SRS resource sets configured with a different value for the higher-layer parameter *resource Type* in the *SRS-ResourceSet* may be configured. The two SRS resource sets with the *resourceType* set to *'semi-persistent'* should not be activated at the same time. Each SRS resource set may include two SRS resources transmitted in different symbols, with each SRS resource in a given set including three SRS ports. The three SRS ports of the second resource should be associated with different UE antenna ports than the three SRS ports of the first resource.

When the UE is indicating *srs-ExtensionAperiodicSRS* only, up to two SRS resource sets with the *resourceType* set to *'aperiodic'* and up to one SRS resource set with the *resourceType* set to *'periodic'* or *'semi-persistent'* may be configured. Additionally or alternatively, up to two SRS resource sets with a different value for the higher-layer parameter *resource Type* in the *SRS-ResourceSet* may be configured. In the case of two resource sets with the *resourceType* set to *'aperiodici'*, a total of two SRS resources may be transmitted in different symbols across two different slots. The three SRS ports of each resource in the two sets should be associated with different UE antenna ports. Each set may be configured with one SRS resource. In the case where one resource set with the *resource Type* set to *'aperiodic'* is configured, two SRS resources should be transmitted in different symbols within the same slot. Each SRS resource in a given set may include three SRS ports, and the three SRS ports of the second resource should be associated with different UE antenna ports than the three SRS ports of the first resource. Each SRS resource set with the *resourceType* set to *'periodic'* or *'semi-persistent'* may include two SRS resources transmitted in different symbols. Each SRS resource in a given set should include three SRS ports, and the three SRS ports of the second resource should be associated with different UE antenna ports than the three SRS ports of the first resource.

If the UE is not indicating *srs AntennaSwitching2SP-lPeriodic,* zero, one, or two SRS resource sets with a different value for the higher-layer parameter *resource Type* in the *SRS-ResourceSet* set to '*periodic*' or '*semi-persistent*' may be configured. If the UE is indicating *srs-AntennaSwitching2SP-1Periodic,* up to two SRS resource sets with the *resourceType* set to '*semi-persistent*' and up to one SRS resource set with the *resourceType* set to '*periodic*' may be configured, provided that the two SRS resource sets with the *resourceType* set to '*semi-persistent*' are not activated at the same time. Each SRS resource set may include two SRS resources transmitted in different symbols. Each SRS resource in a given set may include three SRS ports, and the three SRS ports of the second resource should be associated with different UE antenna ports than the three SRS ports of the first resource.

Additionally or alternatively, zero or one SRS resource sets with the *resourceType* set to '*aperiodic*' may be configured if the UE is not indicating *srs-ExtensionAperiodicSRS*. If the UE is indicating *srs-ExtensionAperiodicSRS,* up to two SRS resource sets with the *resourceType* set to '*aperiodic*' may be configured. In the case where one '*aperiodic*' resource set is configured, two SRS resources should be transmitted in different symbols within the same slot. Each SRS resource may include three SRS ports, and the three SRS ports of the second resource should be associated with different UE antenna ports than the three SRS ports of the first resource. If two resource sets are configured, a total of two SRS resources may be transmitted in different symbols across two different slots. The three SRS ports of each resource in the two sets should be associated with different UE antenna ports. Each set may be configured with one SRS resource.

Otherwise, up to two SRS resource sets could be configured with a different value for the higher-layer parameter *resourceType* in the *SRS-ResourceSet.* Each SRS resource set should include two SRS resources transmitted in different symbols, with each SRS resource in a given set including three SRS ports. The three SRS ports of the second resource should be associated with different UE antenna ports than the three SRS ports of the first resource.

A 3T6R scenario using a 4 port SRS configuration will now be described.

For this configuration, when the UE is indicating *srs-AntennaSwitching2SP-1Periodic* and/or *srs-ExtensionAperiodicSRS,* different resource set configurations can be applied.

According to an embodiment, when the UE is indicating *srs-AntennaSwitching2SP-1Periodic* only, up to two SRS resource sets with the *resource Type* set to '*semi-persistent*' and up to one SRS resource set with the *resourceType* set to '*periodic*' may be configured. Additionally or alternatively, up to two SRS resource sets configured with a different value for the higher-layer parameter *resourceType* in the *SRS-ResourceSet* may be configured. The two SRS resource sets with the *resourceType* set to '*semi-persistent*' should not be activated at the same time. Each SRS resource set may include two SRS resources transmitted in different symbols, with each SRS resource in a given set including four SRS ports. The SRS ports of the second resource should be associated with different UE antenna ports than the SRS ports of the first resource.

When the UE is indicating *srs-ExtensionAperiodicSRS* only, up to two SRS resource sets with the *resourceType* set to '*aperiodic*' and up to one SRS resource set with the *resourceType* set to '*periodic*' or '*semi-persistent*' may be configured. Additionally or alternatively, up to two SRS resource sets configured with a different value for the higher-layer parameter *resource Type* in the *SRS-ResourceSet* may be configured. In the case of two resource sets with the *resourceType* set to '*aperiodici*', a total of two SRS resources may be transmitted in different symbols across two different slots. The SRS ports of each resource in the two sets should be associated with different UE antenna ports. Each set may be configured with one SRS resource. In the case where one resource set with the *resourceType* set to '*aperiodic*' is configured, two SRS resources should be transmitted in different symbols within the same slot. Each SRS resource in a given set may include four SRS ports, and the SRS ports of the second resource should be associated with different UE antenna ports than the SRS ports of the first resource. Each SRS resource set with the *resourceType* set to '*periodic*' or '*semi-persistent*' may include two SRS resources transmitted in different symbols. Each SRS resource in a given set should include four SRS ports, and the SRS ports of the second resource should be associated with different UE antenna ports than the SRS ports of the first resource.

If the UE is not indicating *srs AntennaSwitching2SP-lPeriodic,* zero, one, or two SRS resource sets with a different value for the higher-layer parameter *resource Type* in the *SRS-ResourceSet* set to '*periodic*' or '*semi-persistent*' may be configured. If the UE is indicating *srs-AntennaSwitching2SP-1Periodic,* up to two SRS resource sets with the *resourceType* set to '*semi-persistent*' and up to one SRS resource set with the *resourceType* set to '*periodic*' may be configured, provided that the two SRS resource sets with the *resourceType* set to '*semi-persistent*' are not activated at the same time. Each SRS resource set should include two SRS resources transmitted in different symbols. Each SRS resource in a given set may include four SRS ports, and the SRS ports of the second resource should be associated with different UE antenna ports than the SRS ports of the first resource.

Additionally or alternatively, zero or one SRS resource sets with the *resourceType* set to '*aperiodic*' may be configured if the UE is not indicating *srs-ExtensionAperiodicSRS*. If the UE is indicating *srs-ExtensionAperiodicSRS,* up to two SRS resource sets with the *resourceType* set to '*aperiodic*' may be configured. In the case where one *aperiodic* resource set is configured, two SRS resources should be transmitted in different symbols within the same slot. Each SRS resource may include four SRS ports, and the SRS ports of the second resource should be associated with different UE antenna ports than the SRS ports of the first resource. If two resource sets are configured, a total of two SRS resources may be transmitted in different symbols across two different slots. The SRS ports of each resource in the two sets should be associated with different UE antenna ports. Each set may be configured with one SRS resource.

Otherwise, up to two SRS resource sets may be configured with a different value for the higher-layer parameter *resourceType* in the *SRS-ResourceSet.* Each SRS resource set should include two SRS resources transmitted in different symbols, with each SRS resource in a given set including four SRS ports. The SRS ports of the second resource should be associated with different UE antenna ports than the SRS ports of the first resource.

Accordingly, in these configurations, the number of SRS ports for each resource is four, while the UE only operates three switching events across three ports of each configured SRS resource. This means that the antenna switching over one specific port ID is dropped by the UE. The selection of that one specific port, out of the four antenna ports for each SRS resource, can be determined through a pre-defined rule (e.g., always the fourth port), through gNB configurations, or via a decision at the UE side. This selection criterion could relate to the performance, the UE's PA architecture, the UE's coherency capability, and/or the spatial channel. Hence, there may be a beneficial tradeoff between performance and indication overhead, which may form the basis for the selection criteria. If the port selection is decided at the gNB side, it can be indicated to the UE semi-statically via an RRC configuration or dynamically through a MAC CE and/or DCI. Such an indication may require either a new RRC parameter or a new and/or re-used DCI/MAC CE field, configured in a codepoint or bitmap method, in which the codepoint method would have less overhead. Additionally or alternatively, the UE may decide and then inform the gNB, where the indication can be sent through UE capability signaling.

With no loss of generality, the UE may assume a port re-indexing procedure. The selected specific port may be re-indexed as port 3 (e.g., the fourth port), while the remaining ports are re-indexed accordingly in order of their port numbers to ports 0, 1, and 2. Thus, after re-indexing, the UE may consistently drop the antenna switching procedure over the fourth port of each SRS resource.

A 6T6R scenario using a 6 port SRS configuration will now be described.

For this configuration, up to two SRS resource sets, each with one SRS resource, can be configured, where the number of SRS ports for each resource is six if the UE is not indicating *srs-AntennaSwitching2SP-1Periodic.* Two SRS resource sets may be configured with the *resource Type* in the *SRS-ResourceSet* set to *'semi-persistent',* and one SRS resource set configured with *resourceType* in the *SRS-ResourceSet* set to *'periodic'* can be configured. The two SRS resource sets configured with *'semi-persistent'* may not be activated at the same time. Additionally or alternatively, if the UE is indicating *srs-AntennaSwitching2SP-1Periodic,* up to two SRS resource sets can be configured, each with one SRS resource, where the number of SRS ports for each resource is six.

A 6T6R scenario using an 8 port SRS configuration will now be described.

For this configuration, up to two SRS resource sets, each with one SRS resource, can be configured, where the number of SRS ports for each resource is eight if the UE is not indicating *srs-AntennaSwitching2SP-1Periodic.* Two SRS resource sets may be configured with the *resource Type* in the *SRS-ResourceSet* set to *'semi-persistent'*, and one SRS resource set configured with *resourceType* in the *SRS-ResourceSet* set to *periodic* can be configured, where the two *semi-persistent* resource sets are not activated at the same time. Additionally or alternatively, if the UE is indicating *srs-AntennaSwitching2SP-lPeriodic,* up to two SRS resource sets can be configured, each with one SRS resource, where the number of SRS ports for each resource is eight.

In this configuration, the number of SRS ports for each resource is eight, while the UE only needs to perform six switching events across six ports for each configured SRS resource. This means the UE may drop antenna switching for two specific ports. The selection of these two specific ports, out of the eight antenna ports of each SRS resource, can be determined either by a pre-defined rule (e.g., always the seventh and eighth ports), by gNB configurations, or by a decision made at the UE side. This selection criterion may depend on factors such as performance, the UE's PA architecture, the UE's coherency capability, and/or spatial channel conditions. In general, there may be a tradeoff between performance and signaling overhead that may guide the selection process.

If port selection is determined by the gNB, it can be communicated to the UE semi-statically through an RRC configuration or dynamically through a MAC CE and/or DCI. Such an indication may require either a new RRC parameter or a new/reused DCI/MAC CE field in a codepoint or bitmap format. Additionally or alternatively, the UE may decide which ports to drop and inform the gNB through UE capability signaling.

With no loss of generality, the UE may assume a port re-indexing procedure where the two selected specific ports are re-indexed as ports 6 and 7 (e.g., the seventh and eighth ports), while the remaining ports are re-indexed in order as ports 0 through 5. After re-indexing, the UE may consistently drop antenna switching for the last two ports of each SRS resource.

An 8T8R scenario using a 3 port SRS configuration will now be described.

For this configuration, if the UE is indicating *srs-AntennaSwitching2SP-1Periodic* and/or *srs-ExtensionAperiodicSRS,* different resource set configurations can be applied.

According to an embodiment, when the UE is indicating *srs-AntennaSwitching2SP-1Periodic* only, then up to two SRS resource sets with *resource Type* in the *SRS-ResourceSet* set to *'semi-persistent'* and up to one SRS resource set with *resourceType* in the *SRS-ResourceSet* set to *'periodic'* can be configured, or up to two SRS resource sets configured with a different value for the higher layer parameter *resource Type* in the *SRS-ResourceSet* can be configured. The two SRS resource sets configured with *'semi-persistent'* may not be activated at the same time. Each SRS resource set may have $3 \leq M \leq 8$ SRS resources transmitted in different symbols, with each SRS resource in a given set including three SRS ports, and the three SRS ports of each resource may be associated with at least two specific different UE antenna ports (e.g., based on a pre-defined rule or configured and/or indicated) than the three SRS ports of another resource.

When the UE is indicating *srs-ExtensionAperiodicSRS* only, then up to two SRS resource sets with *resource Type* in the *SRS-ResourceSet* set to *'aperiodic'* and up to one SRS resource set with *resource Type* in the *SRS-ResourceSet* set to *'periodic'* or *'semi-persistent'* can be configured, or up to two SRS resource sets configured with a different value for the higher layer parameter *resourceType* in the *SRS-ResourceSet* can be configured. In the case of two resource sets with *resource Type* in the *SRS-ResourceSet* set to *'aperiodici'*, a total of $3 \leq M \leq 8$ SRS resources may be transmitted in different symbols of two different slots, with the three SRS ports of each SRS resource in the given two sets associated with at least two specific different UE antenna ports (e.g., based on a pre-defined rule or configured and/or indicated). In the case of one resource set with *resource Type* in the *SRS-ResourceSet* set to *'aperiodici'*, a total of $3 \leq M \leq 8$ SRS resources may be transmitted in different symbols in the same slot, with each SRS resource in a given set including three SRS ports, and the three SRS ports of each resource are associated with at least two specific different UE antenna ports (e.g., based on a pre-defined rule or configured and/or indicated) than the three SRS ports of another resource. Each SRS resource set with *resource Type* in the *SRS-ResourceSet* set to *'periodic'* or *'semi-persistent'* may have $3 \leq M \leq 8$ SRS resources transmitted in different symbols, with each SRS resource in a given set including three SRS ports, and the three SRS ports of each resource may be associated with at least two specific different UE antenna ports (e.g., based on a pre-defined rule or configured and/or indicated) than the three SRS ports of another resource.

Zero, one, or two SRS resource sets configured with a different value for the higher layer parameter *resource Type* in the *SRS-ResourceSet* set to *'periodic'* or *'semi-persistent'* may be configured if the UE is not indicating *srs-AntennaSwitching2SP-1Periodic.* If the UE is indicating *srs-AntennaSwitching2SP-IPeriodic,* up to two SRS resource sets configured with *resource Type* in the *SRS-ResourceSet* set to *'semi-persistent'* and up to one SRS resource set configured with *resourceType* in the *SRS-ResourceSet* set to *'periodic'* may be configured. The two *'semi-persistent'* SRS resource sets may not be activated at the same time. Each SRS resource set may have $3 \leq M \leq 8$ SRS resources transmitted in different symbols, each SRS resource in a given set including three SRS ports, and the three SRS ports of each resource may be associated with at least two specific different UE antenna ports (e.g., based on a pre-defined rule or configured and/or indicated) than the three SRS ports of another resource.

Zero or one SRS resource sets configured with *resource Type* in the *SRS-ResourceSet* set to *'aperiodic'* may be configured if the UE is not indicating *srs-ExtensionAperiodicSRS,* or up to two SRS resource sets configured with *resource Type* in the *SRS-ResourceSet* set to *'aperiodic'* may be configured if the UE is indicating *srs-ExtensionAperiodicSRS.* In the case of one resource set, a total of $3 \leq M \leq 8$ SRS resources may be transmitted in different symbols in the same slot, with each SRS resource in a given set including three SRS ports, and the three SRS ports of each resource are associated with at least two specific different UE antenna ports (e.g.., based on a pre-defined rule or configured and/or indicated) than the three SRS ports of another resource. In the case of two resource sets, a total of $3 \leq M \leq 8$ SRS resources may be transmitted in different symbols of two different slots, with the three SRS ports of each SRS resource in the given two sets associated with at least two specific different UE antenna ports (e.g., based on a pre-defined rule or configured and/or indicated).

Otherwise, up to two SRS resource sets configured with a different value for the higher layer parameter *resource Type* in the *SRS-ResourceSet* may be configured. Each SRS resource set may have $3 \leq M \leq 8$ SRS resources transmitted in different symbols, with each SRS resource in a given set including three SRS ports, and the three SRS ports of each resource may be associated with at least two specific different UE antenna ports (e.g., based on a pre-defined rule or configured and/or indicated) than the three SRS ports of another resource.

In the 3 port SRS configurations, the three SRS ports of two SRS resources may be associated with different UE antenna ports, while the three SRS ports for the remaining SRS resources may be associated with at least two specific different UE antenna ports (e.g., based on a pre-defined rule or configured and/or indicated) shared with one of those two SRS resources. To provide the maximum possible opportunities for the UE to freely select, combine, and switch three transmit ports out of its eight ports for a 3 Tx transmission, up to 56 SRS resources can be transmitted. Each SRS resource may include three SRS ports, and the three SRS ports of each resource may be associated with at least one specific different UE antenna port (e.g., based on a pre-defined rule or configured and/or indicated) than the three SRS ports of another resource.

The at least two specific different UE antenna ports can be identified through a pre-defined rule, through gNB configurations, or through a decision at the UE side. The selection criteria may also relate to the performance, a UE's PA architecture, the UE's coherency capability, and/or a spatial channel condition. Hence, in general, there may be a beneficial tradeoff between performance and indication overhead that would inform the selection criteria. When port selection is decided at the gNB side, it can be indicated to the UE semi-statically through an RRC configuration or dynamically through a MAC CE and/or DCI. Such indication may require a new RRC parameter or a new and/or a re-used DCI/MAC CE field in a codepoint or bitmap method, in which a codepoint method would involve less overhead. Additionally or alternatively, the UE may decide the ports and inform the gNB through UE capability signaling.

An 8T8R scenario using a 4 port SRS configuration will now be described.

For this configuration, if the UE is indicating *srs-AntennaSwitching2SP-1Periodic* and/or *srs-ExtensionAperiodicSRS,* different resource set configurations can be applied.

When the UE is indicating *srs-AntennaSwitching2SP-IPeriodic* only, then up to two SRS resource sets with *resource Type* in *SRS-ResourceSet* set to *'semi-persistent'* and up to one SRS resource set with *resource Type* in *SRS-ResourceSet* set to *'periodic'* can be configured, or up to two SRS resource sets configured with a different value for the higher-layer parameter *resource Type* in *SRS-ResourceSet* can be configured. In this case, the two SRS resource sets configured with *'semi-persistent'* may not be activated at the same time. Each SRS resource set may have $3 \leq M \leq 8$ SRS resources transmitted in different symbols. Each SRS resource in a given set may include four SRS ports, and the four SRS ports of each resource may be associated with at least two specific different UE antenna ports (e.g., based on a pre-defined rule or configured and/or indicated) with a non-zero power compared to the four SRS ports of another resource.

When the UE is indicating *srs-ExtensionAperiodicSRS* only, then up to two SRS resource sets with *resource Type* in *SRS-ResourceSet* set to *'aperiodic'* and up to one SRS resource set with *resource Type* in *SRS-ResourceSet* set to *'periodic'* or *'semi-persistent'* can be configured, or up to two SRS resource sets configured with a different value for the higher-layer parameter *resourceType* in *SRS-ResourceSet* can be configured. In the case of two resource sets with *resource Type* in *SRS-ResourceSet* set to *'aperiodic',* a total of $3 \leq M \leq 8$ SRS resources may be transmitted in different symbols of two different slots. The four SRS ports of each SRS resource in the given two sets may be associated with at least two specific different UE antenna ports (e.g., based on a pre-defined rule or configured and/or indicated) with a non-zero power. In the case of one resource set with *resource Type* in *SRS-ResourceSet* set to *'aperiodic'*, a total of $3 \leq M \leq 8$ SRS resources may be transmitted in different symbols in the same slot. Each SRS resource in a given set may include four SRS ports, and the four SRS ports of each resource may be associated with at least two specific different UE antenna ports (e.g., based on a pre-defined rule or configured and/or indicated) with a non-zero power compared to the four SRS ports of another resource. Each SRS resource set with *resource Type* in *SRS-ResourceSet* set to *'periodic'* or *'semi-persistent'* may have $3 \leq M \leq 8$ SRS resources transmitted in different symbols. Each SRS resource in a given set may include four SRS ports, and the four SRS ports of each resource may be associated with at least two specific different UE antenna ports (e.g., based on a pre-defined rule or configured and/or indicated) with a non-zero power compared to the four SRS ports of another resource.

Zero, one, or two SRS resource sets configured with a different value for the higher-layer parameter *resource Type* in *SRS-ResourceSet* set to *'periodic'* or *'semi-persistent'* may be configured if the UE is not indicating *srs AntennaSwitching2SP-IPeriodic.* Additionally or alternatively, up to two SRS resource sets configured with *resource Type* in *SRS-ResourceSet* set to *'semi-persistent'* and up to one SRS resource set configured with *resourceType* in *SRS-ResourceSet* set to *'periodic'* may be configured if the UE is indicating *srs-AntennaSwitching2SP-1Periodic.* The two SRS resource sets configured with *'semi-persistent'* may not be activated at the same time. Each SRS resource set may have $3 \leq M \leq 8$ SRS resources transmitted in different symbols. Each SRS resource in a given set may include four SRS ports, and the four SRS ports of each resource may be associated with at least two specific different UE antenna ports (e.g., based on a pre-defined rule or configured and/or indicated) with a non-zero power compared to the four SRS ports of another resource.

Zero or one SRS resource sets configured with *resource Type* in *SRS-ResourceSet* set to *'aperiodic'* may be configured if the UE is not indicating *srs-ExtensionAperiodicSRS.* Additionally or alternatively, up to two SRS resource sets configured with *resourceType* in *SRS-ResourceSet* set to *'aperiodic'* may be configured if the UE is indicating *srs-ExtensionAperiodicSRS.* In the case of one resource set, a total of $3 \leq M \leq 8$ SRS resources may be transmitted in different symbols in the same slot. Each SRS resource in a given set may include four SRS ports, and the four SRS ports of each resource may be associated with at least two specific different UE antenna ports (e.g., based on a pre-defined rule or configured and/or indicated) with a non-zero power compared to the four SRS ports of another resource. In the case of two resource sets, a total of $3 \leq M \leq 8$ SRS resources may be transmitted in different symbols of two different slots. The four SRS ports of each SRS resource in the given two sets may be associated with at least two specific different UE antenna ports (e.g., based on a pre-defined rule or configured and/or indicated) with a non-zero power.

Otherwise, up to two SRS resource sets configured with a different value for the higher-layer parameter *resource Type* in *SRS-ResourceSet* may be configured, where each SRS resource set has $3 \leq M \leq 8$ SRS resources transmitted in different symbols. Each SRS resource in a given set may include four SRS ports, and the four SRS ports of each resource may be associated with at least two specific different UE antenna ports (e.g., based on a pre-defined rule or configured and/or indicated) with a non-zero power compared to the four SRS ports of another resource.

In these 4 port SRS configurations, the number of SRS ports for each resource may be four. However, the UE would only need to manage three switching events across three ports of each configured SRS resource. In other words, the antenna switching over one specific port may be dropped by the UE. The selection of this specific port, out of the four antenna ports in each SRS resource, can be determined either by a pre-defined rule (e.g., always selecting the fourth port), through gNB configurations, or by a decision made on the UE side. Such selection criteria might relate to factors such as performance, the UE's PA architecture, the UE's coherency capability, and the spatial channel. Consequently, there may be a beneficial tradeoff between performance and signaling overhead that shapes the selection criteria.

If the port selection is determined by the gNB, it can be indicated to the UE either semi-statically via an RRC configuration or dynamically through a MAC CE and/or DCI. Such indications may require either a new RRC parameter or re-purposed fields in a DCI/MAC CE, delivered through a codepoint or bitmap method, with the codepoint method offering a lower overhead. Additionally or alternatively, the UE may identify the port and inform the gNB via UE capability signaling.

With no loss of generality, a port re-indexing procedure can be assumed at the UE. In this case, the selected specific port may be re-indexed as port 3 (e.g., the fourth port), while the other remaining ports would be re-indexed accordingly based on their port number, to ports 0, 1, and 2. After re-indexing, the UE may consistently drop the antenna switching procedure for the fourth port of each SRS resource.

Additionally or alternatively, at least two specific UE antenna ports can be identified either by a pre-defined rule, through gNB configurations, or by a decision made at the UE side. The selection criteria may also consider performance, the UE's PA architecture, the UE's coherency capability, and spatial channel conditions. Thus, a tradeoff between performance and signaling overhead may likely influence the selection process. When port selection is determined by the gNB, it can be conveyed to the UE semi-statically via an RRC configuration, or dynamically through a MAC CE and/or DCI. This approach may require either a new RRC parameter or reused DCI/MAC CE fields, formatted as a codepoint or bitmap method, with the codepoint method offering less overhead. Additionally or alternatively, the UE may choose the ports and communicate this decision to the gNB through UE capability signaling.

A downgrading configuration will now be described.

To reduce the potential overhead of SRS resources and enhance UE power efficiency, SRS resources may be configured with downgrading configurations, alongside new UE capability reporting. With 3 Tx antenna port devices, there may be a need to define and support new UE capability designs for configurations such as {t1r1, tlr3, tlr6} and {t1r1, tlr3, t3r3, t3r6, t6r6}.

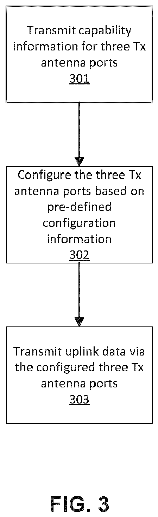

FIG. 3 is a flowchart illustrating configuring a UE for transmitting UL data via three configured Tx antenna ports, according to an embodiment.

Referring to FIG. 3, in step 301, the UE transmits capability information for three Tx (3 Tx) antenna ports. This step may involve the UE sending a message that indicates its support for three Tx antenna ports for UL transmission. This capability information may include details such as the maximum number of supported transmission layers, the number of available SRS ports, or supported precoding configurations. The transmitted capability information may enable the network (e.g., a base station) to adaptively configure the UE's UL transmission scheme based on the UE's capabilities, thus optimizing the UL performance.

In step 302, the UE configures the three Tx antenna ports based on pre-defined configuration information. This step may involve setting up the UE's UL transmission parameters according to the specific configuration data provided by the network. This configuration information may include, but is not limited to, codebook designs, SRS resource settings, and antenna port mappings that are tailored for the three Tx antenna ports. By applying these configurations, the UE optimizes its UL transmission behavior to align with the network's requirements.

In step 303, the UE transmits UL data via the configured three Tx antenna ports. This step may involve sending data from the UE to the base station using the established configuration for the three Tx antenna ports. This transmission may utilize predefined beamforming or precoding techniques to optimize signal strength and quality, ensuring effective data communication over the three Tx antenna ports. As a result, the UL data can be conveyed with improved reliability and performance, supporting a range of transmission schemes, such as coherent, non-coherent, or partial coherent transmission.

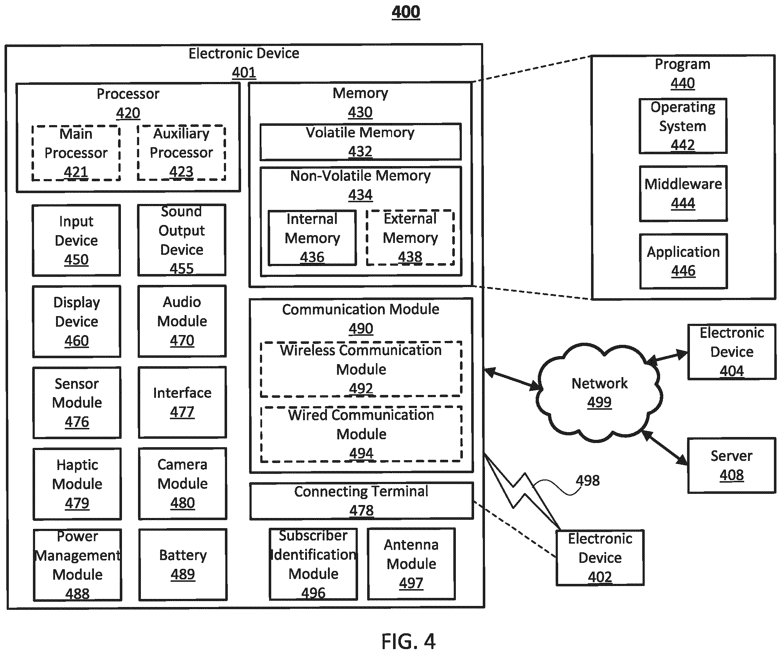

FIG. 4 is a block diagram of an electronic device in a network environment, according to an embodiment.

Referring to FIG. 4, the electronic device 401 and its components work to provide enhanced communication capabilities across both short-range and long-range wireless networks. In this context, the advancements provided in this disclosure significantly improve the technological operation of various components, such as a processor, communication module, antenna module, and memory. For instance, the communication module 490, in conjunction with the antenna module 494, allows the electronic device 401 to efficiently manage three Tx ports for UL communication. This three Tx port management ability offers flexible antenna switching, which reduces interference and optimizes signal strength during data transmissions. Such improvements not only enhance the reliability and efficiency of the device's wireless communications but also reduce power consumption during operation, thus improving battery life 489.

The processor 420 may execute specialized software for managing three antenna ports for UL transmissions. This improves the ability of the communication module 490 to dynamically select between different ports based on real-time data. The processor's enhanced ability to handle complex calculations, such as determining cyclic shifts and managing port switching, provides improved communication performance and flexibility for 3 Tx antenna devices. As a result, the processing power dedicated to these tasks supports more sophisticated modulation schemes and resource allocations, further optimizing the performance of the electronic device 401 in network environments. Additionally, the memory 430 stores instructions and data to configure the communication protocols of the device 401, facilitating integration with other networked devices.

The electronic device 401, shown in FIG. 4, is in a network environment 400 and may communicate with an electronic device 402 via a first network 498 (e.g., a short-range wireless communication network), or an electronic device 404 or a server 408 via a second network 499 (e.g., a long-range wireless communication network). The electronic device 401 may communicate with the electronic device 404 via the server 408. The electronic device 401 may include a processor 420, a memory 430, an input device 440, a sound output device 455, a display device 460, an audio module 470, a sensor module 476, an interface 477, a haptic module 479, a camera module 480, a power management module 488, a battery 489, a communication module 490, a subscriber identification module (SIM) card 496, or an antenna module 494. In one embodiment, at least one (e.g., the display device 460 or the camera module 480) of the components may be omitted from the electronic device 401, or one or more other components may be added to the electronic device 401. Some of the components may be implemented as a single integrated circuit (IC). For example, the sensor module 476 (e.g., a fingerprint sensor, an iris sensor, or an illuminance sensor) may be embedded in the display device 460 (e.g., a display).

The processor 420 may execute software (e.g., a program 440) to control at least one other component (e.g., a hardware or a software component) of the electronic device 401 coupled with the processor 420 and may perform various data processing or computations.

As at least part of the data processing or computations, the processor 420 may load a command or data received from another component (e.g., the sensor module 446 or the communication module 490) in volatile memory 432, process the command or the data stored in the volatile memory 432, and store resulting data in non-volatile memory 434. The processor 420 may include a main processor 421 (e.g., a central processing unit (CPU) or an AP), and an auxiliary processor 423 (e.g., a graphics processing unit (GPU), an image signal processor (ISP), a sensor hub processor, or a communication processor (CP)) that is operable independently from, or in conjunction with, the main processor 421. Additionally or alternatively, the auxiliary processor 423 may be adapted to consume less power than the main processor 421 or execute a particular function. The auxiliary processor 423 may be implemented as being separate from, or a part of, the main processor 421.

The auxiliary processor 423 may control at least some of the functions or states related to at least one component (e.g., the display device 460, the sensor module 476, or the communication module 490) among the components of the electronic device 401, instead of the main processor 421 while the main processor 421 is in an inactive (e.g., sleep) state, or together with the main processor 421 while the main processor 421 is in an active state (e.g., executing an application). The auxiliary processor 423 (e.g., an image signal processor or a communication processor) may be implemented as part of another component (e.g., the camera module 480 or the communication module 490) functionally related to the auxiliary processor 423.

The memory 430 may store various data used by at least one component (e.g., the processor 420 or the sensor module 476) of the electronic device 401. The various data may include, for example, software (e.g., the program 440) and input data or output data for a command related thereto. The memory 430 may include the volatile memory 432 or the non-volatile memory 434.

The program 440 may be stored in the memory 430 as software, and may include, for example, an operating system (OS) 442, middleware 444, or an application 446.

The input device 450 may receive a command or data to be used by another component (e.g., the processor 420) of the electronic device 401, from the outside (e.g., a user) of the electronic device 401. The input device 450 may include, for example, a microphone, a mouse, or a keyboard.

The sound output device 455 may output sound signals to the outside of the electronic device 401. The sound output device 455 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 460 may visually provide information to the outside (e.g., a user) of the electronic device 401. The display device 460 may include, for example, a display, a hologram device, or a projector and control circuitry to control a corresponding one of the display, hologram device, and projector. The display device 460 may include touch circuitry adapted to detect a touch, or sensor circuitry (e.g., a pressure sensor) adapted to measure the intensity of force incurred by the touch.

The audio module 470 may convert a sound into an electrical signal and vice versa. The audio module 470 may obtain the sound via the input device 450 or output the sound via the sound output device 455 or a headphone of an external electronic device 402 directly (e.g., wired) or wirelessly coupled with the electronic device 401.

The sensor module 476 may detect an operational state (e.g., power or temperature) of the electronic device 401 or an environmental state (e.g., a state of a user) external to the electronic device 401, and then generate an electrical signal or data value corresponding to the detected state. The sensor module 476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 477 may support one or more specified protocols to be used for the electronic device 401 to be coupled with the external electronic device 402 directly (e.g., wired) or wirelessly. The interface 477 may include, for example, a high- definition multimedia interface (HDMI), a universal serial bus (USB) interface, a secure digital (SD) card interface, or an audio interface.

A connecting terminal 478 may include a connector via which the electronic device 401 may be physically connected with the external electronic device 402. The connecting terminal 478 may include, for example, an HDMI connector, a USB connector, an SD card connector, or an audio connector (e.g., a headphone connector).

The haptic module 479 may convert an electrical signal into a mechanical stimulus (e.g., a vibration or a movement) or an electrical stimulus which may be recognized by a user via tactile sensation or kinesthetic sensation. The haptic module 479 may include, for example, a motor, a piezoelectric element, or an electrical stimulator.

The camera module 480 may capture a still image or moving images. The camera module 480 may include one or more lenses, image sensors, image signal processors, or flashes. The power management module 488 may manage power supplied to the electronic device 401. The power management module 488 may be implemented as at least part of, for example, a power management integrated circuit (PMIC).

The battery 489 may supply power to at least one component of the electronic device 401. The battery 489 may include, for example, a primary cell which is not rechargeable, a secondary cell which is rechargeable, or a fuel cell.

The communication module 490 may support establishing a direct (e.g., wired) communication channel or a wireless communication channel between the electronic device 401 and the external electronic device (e.g., the electronic device 402, the electronic device 404, or the server 408) and performing communication via the established communication channel. The communication module 490 may include one or more communication processors that are operable independently from the processor 420 (e.g., the AP) and supports a direct (e.g., wired) communication or a wireless communication. The communication module 490 may include a wireless communication module 492 (e.g., a cellular communication module, a short-range wireless communication module, or a global navigation satellite system (GNSS) communication module) or a wired communication module 494 (e.g., a local area network (LAN) communication module or a power line communication (PLC) module). A corresponding one of these communication modules may communicate with the external electronic device via the first network 498 (e.g., a short-range communication network, such as Bluetooth™, wireless-fidelity (Wi-Fi) direct, or a standard of the Infrared Data Association (IrDA)) or the second network 499 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 492 may identify and authenticate the electronic device 401 in a communication network, such as the first network 498 or the second network 499, using subscriber information (e.g., international mobile subscriber identity (IMSI)) stored in the subscriber identification module 496.

The antenna module 497 may transmit or receive a signal or power to or from the outside (e.g., the external electronic device) of the electronic device 401. The antenna module 497 may include one or more antennas, and, therefrom, at least one antenna appropriate for a communication scheme used in the communication network, such as the first network 498 or the second network 499, may be selected, for example, by the communication module 490 (e.g., the wireless communication module 492). The signal or the power may then be transmitted or received between the communication module 490 and the external electronic device via the selected at least one antenna.

Commands or data may be transmitted or received between the electronic device 401 and the external electronic device 404 via the server 408 coupled with the second network 499. Each of the electronic devices 402 and 404 may be a device of a same type as, or a different type, from the electronic device 401. All or some of operations to be executed at the electronic device 401 may be executed at one or more of the external electronic devices 402, 404, or 408. For example, if the electronic device 401 should perform a function or a service automatically, or in response to a request from a user or another device, the electronic device 401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 401. The electronic device 401 may provide the outcome, with or without further processing of the outcome, as at least part of a reply to the request. To that end, a cloud computing, distributed computing, or client-server computing technology may be used, for example.

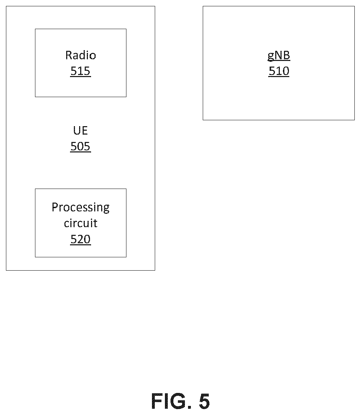

FIG. 5 illustrates a system including a UE and a gNB, in communication with each other, according to an embodiment.

Referring to FIG. 5, the UE 505includes a radio 515 and a processing circuit (or a means for processing) 520, which may perform various methods disclosed herein, e.g., the method illustrated in FIG. 3. For example, the processing circuit 520 may receive, via the radio 515, transmissions from the network node (gNB) 510, and the processing circuit 520 may transmit, via the radio 515, signals to the gNB 510.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

1. A method performed by a user equipment, UE, comprising:

     transmitting, by the UE, capability information for three transmit, Tx, antenna ports;
     configuring the three Tx antenna ports based on pre-defined configuration information including a codebook design comprising one or more matrices or vectors to map uplink data to be transmitted to more than two Tx antenna ports and less than four Tx antenna ports; and
     transmitting the uplink data via the configured three Tx antenna ports.

2. The method of Claim 1, wherein the codebook design supports one or more of coherent, non-coherent, or partial coherent precoding for uplink transmission.

3. The method of Claim 1 or 2, wherein the codebook design supports one or more non-coherent precoders for single-layer transmission, two-layer transmission, or three-layer transmission.

4. The method of Claim 3, wherein in the case of single-layer transmission, the following non-coherent precoder is supported:

$$\frac{1}{\sqrt{3}}\begin{bmatrix}1\\0\\0\end{bmatrix}, \frac{1}{\sqrt{3}}\begin{bmatrix}0\\1\\0\end{bmatrix}, \frac{1}{\sqrt{3}}\begin{bmatrix}0\\0\\1\end{bmatrix},$$

wherein in the case of two-layer transmission, the following non-coherent precoder is supported:

$$\frac{1}{\sqrt{3}}\begin{bmatrix}1&0\\0&1\\0&0\end{bmatrix}, \frac{1}{\sqrt{3}}\begin{bmatrix}1&0\\0&0\\0&1\end{bmatrix}, \frac{1}{\sqrt{3}}\begin{bmatrix}0&0\\1&0\\0&1\end{bmatrix},$$

and
wherein in the case of three-layer transmission, the following non-coherent precoder is supported:

$$\frac{1}{\sqrt{3}}\begin{bmatrix}1&0&0\\0&1&0\\0&0&1\end{bmatrix}.$$

5.  The method of any one of Claims 1 to 4, wherein the pre-defined configuration information includes a configuration of four port sounding reference signal, SRS, resources for the three Tx antenna ports.

6.  The method of Claim 5, wherein one port included in the four port SRS resources is muted with a zero allocated power,

    wherein the remaining SRS ports are unmuted, and
    wherein the remaining unmuted SRS ports are reindexed in a case in which the one port included in the four port SRS resources that is muted with the zero allocated power is not the fourth SRS port.

7.  The method of Claim 6, further comprising splitting a linear SRS power equally among the unmuted SRS ports.

8.  The method of Claim 5, wherein one port included in the four port SRS resources is muted with zero allocated power for a physical uplink shared channel, PUSCH, transmission,

    wherein the remaining SRS ports for the PUSCH transmission are unmuted, and
    wherein the remaining unmuted SRS ports for the PUSCH transmission are reindexed in a case in which the one port included in the four port SRS resources that is muted with the zero allocated power is not the fourth SRS port.

9.  The method of Claim 8, further comprising splitting a linear PUSCH transmission power equally among the unmuted SRS ports for the PUSCH transmission.

10. The method of any one of Claims 1 to 9, wherein the capability information comprises one or more of a maximum number of supported layers or a maximum number of sounding reference signal, SRS, ports.

11. The method of any one of Claims 1 to 10, wherein the capability information comprises a radio resource, RRC, parameter to enable the uplink transmission via the three Tx antenna ports.

12. The method of any one of Claim 1, wherein the pre-defined configuration information comprises a sounding reference signal, SRS, resource set configuration for an antenna switching case including, at least, three transmission antennas and six receiving antennas, 3T6R.

13. A user equipment, UE, comprising:

    a memory device; and
    a processor configured to execute instructions stored on the memory device, wherein the instructions cause the processor to perform the method according to any one of the preceding claims.

100

Controller module
101

Antenna module
103

Storage module
102

FIG. 1

FIG. 2

Transmit capability
information for three Tx
antenna ports
301

Configure the three Tx
antenna ports based on
pre-defined
configuration
information
302

Transmit uplink data via
the configured three Tx
antenna ports
303

FIG. 3

**FIG. 4**

Radio
515

UE
505

Processing
circuit
520

gNB
510

FIG. 5

Europäisches
Patentamt
European
Patent Office
Office européen
des brevets

# EUROPEAN SEARCH REPORT

**Application Number**

EP 24 21 7013

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/022306 A1 (WANG BICHAI [CN] ET AL) 18 January 2024 (2024-01-18) * page 23, paragraph [185] - page 37, paragraph [338] * ----- | 1-13 | INV. H04L5/00 H04B7/0404 H04B7/0456 |
| X | WO 2023/050117 A1 (QUALCOMM INC [US]; XIAO KEXIN [CN] ET AL.) 6 April 2023 (2023-04-06) * page 42, paragraph [143] - page 44, paragraph [153] * ----- | 1-13 | |
| X | WO 2023/097629 A1 (GUANGDONG OPPO MOBILE TELECOMMUNICATIONS CORP LTD [CN]) 8 June 2023 (2023-06-08) * page 13, line 13 - page 14, line 24 * ----- | 1-13 | |
| E | WO 2024/250696 A1 (LENOVO BEIJING LTD [CN]) 12 December 2024 (2024-12-12) * page 18, paragraph [72] - page 29, paragraph [111] * ----- | 1-5,12, 13 | |
| | | | **TECHNICAL FIELDS SEARCHED (IPC)** H04L H04B |

The present search report has been drawn up for all claims

| Place of search | Date of completion of the search | Examiner |
|---|---|---|
| The Hague | 6 May 2025 | Gökceli, Selahattin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                  
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 7013

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | Publication date | Patent family member(s) | | Publication date |
|---|---|---|---|---|
| US 2024022306 A1 | 18-01-2024 | CN | 114598366 A | 07-06-2022 |
| | | EP | 4239898 A1 | 06-09-2023 |
| | | US | 2024022306 A1 | 18-01-2024 |
| | | WO | 2022117046 A1 | 09-06-2022 |
| WO 2023050117 A1 | 06-04-2023 | US | 2024356588 A1 | 24-10-2024 |
| | | WO | 2023050117 A1 | 06-04-2023 |
| WO 2023097629 A1 | 08-06-2023 | CN | 118251956 A | 25-06-2024 |
| | | EP | 4444008 A1 | 09-10-2024 |
| | | US | 2024323071 A1 | 26-09-2024 |
| | | WO | 2023097629 A1 | 08-06-2023 |
| WO 2024250696 A1 | 12-12-2024 | NONE | | |

EPO FORM P0459

For more details about this annex : see Official Journal of the European Patent Office, No. 12/82